(19) **Europäisches Patentamt European Patent Office Office européen des brevets**

(11) **EP 3 933 117 B1**

(12) **EUROPEAN PATENT SPECIFICATION**

(45) Date of publication and mention of the grant of the patent:
**14.02.2024 Bulletin 2024/07**

(21) Application number: **20762319.0**

(22) Date of filing: **14.02.2020**

(51) International Patent Classification (IPC):
***E02F 9/20*** *(2006.01)*

(52) Cooperative Patent Classification (CPC):
**E02F 3/435; E02F 9/264;** E02F 9/205

(86) International application number:
**PCT/JP2020/005894**

(87) International publication number:
**WO 2020/175198 (03.09.2020 Gazette 2020/36)**

(54) **WORK MACHINE**

ARBEITSMASCHINE

ENGIN DE CHANTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2019 JP 2019035847**

(43) Date of publication of application:
**05.01.2022 Bulletin 2022/01**

(73) Proprietor: **Hitachi Construction Machinery Co., Ltd.**
**Tokyo 110-0015 (JP)**

(72) Inventors:
• **NAKAMURA Satoshi**
**Tokyo 100-8280 (JP)**
• **TORIYAMA Youhei**
**Tsuchiura-shi, Ibaraki 300-0013 (JP)**
• **SAKAMOTO Hiroshi**
**Tsuchiura-shi, Ibaraki 300-0013 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
JP-A- 2005 090 191    JP-A- 2009 236 752
JP-A- 2009 236 752    JP-A- 2010 089 633
JP-A- 2019 158 774    JP-U- H0 547 062
US-A1- 2018 196 438

EP 3 933 117 B1

**Description**

Technical Field

The present invention relates to a work machine that makes it possible to measure a work-target-object weight during a haulage step in loading work for a haulage machine.

Background Art

Work machines represented by hydraulic excavators perform loading work of making the cargo bed of a certain haulage machine (e.g. a dump truck) full of a work target object by repeatedly loading the work target object onto the cargo bed of the haulage machine, in some cases. Loading work by a hydraulic excavator having a work arm (work implement) to which a bucket is attached at its tip is mentioned here as an example. The loading work includes a plurality of loading cycles, and each loading cycle includes the following three steps: an excavation step of excavating a work target object, and filling the inside of the bucket with the work target object; a haulage step of swinging an upper swing structure after the excavation step, and moving the bucket to a position above the cargo bed of a haulage machine; and a loading step of releasing the work target object onto the cargo bed of the haulage machine, and thereafter moving the bucket to a position where the excavation step is to be started. Note that loading work for each haulage machine onto which a work target object is loaded can be distinguished from that for other haulage machines.

Regarding such loading work, there are some work machines that include a controller (controller) that measures a work-target-object weight (also referred to as a hauled weight) during a haulage step at each loading cycle, and integrates all the hauled weights measured during loading work for a certain haulage machine, to thereby calculate an amount of a load having been loaded onto the certain haulage machine (also referred to as a loaded weight). By measuring and recording loaded amounts of haulage machines, a manager of a work site can grasp the amount of a work target object carried by the haulage machines out from the work site, and it becomes possible to monitor the amount of production of the work site.

In order to appropriately monitor the amount of production of a work site, it is necessary to manage, in association with each other, a loaded amount of a haulage machine calculated by a work machine, and information about the haulage machine onto which a work target object has been loaded.

As a work-amount monitoring system for a work machine, Patent Document 1 discloses a system in which a weight (loaded amount) integrated by a work machine is transmitted to a haulage machine and system terminal equipment of a work site via a wireless communication system that is capable of bidirectional communication.

Prior Art Document

Patent Document

Patent Document 1: JP-2010-89633-A

Summary of the Invention

Problem to be Solved by the Invention

In the work-amount monitoring system of Patent Document 1, the transmission of the loaded amount from the work machine to the haulage machine or the system terminal equipment of the work site, or the resetting of the loaded amount at the time when the work proceeds to loading work for the next haulage machine are performed through manual operation by an operator of the work machine. Accordingly, at a work site where loading work is performed continuously for a plurality of haulage machines, the operator easily forgets to perform the manual operation, makes mistakes in the manual operation, and so on, because haulage machines come and go frequently, and there is a problem that it is difficult to correctly calculate a loaded amount of each haulage machine.

An object of the present invention is to provide a work machine that makes it possible to accurately calculate a loaded amount of a haulage machine.

Means for Solving the Problem

In order to solve such a problem, a work machine according to the present invention includes: a machine body; a work arm that has, on one end side of the work arm, a work device that performs loading of a work target object onto a haulage machine, and is, on another end side of the work arm, attached to the machine body; a posture sensor that senses a posture of the work arm including the work device; a load sensor that senses a load acting on the work arm; a notification device for giving notification of a work instruction to the haulage machine; and a controller that determines, on the basis of the posture and the load, that a haulage step of hauling the work target object onto the haulage machine has been performed by the work arm, measures a weight of the work target object during the haulage step, and determines, on the basis of the posture or the load, that a loading step of performing loading of the work target object onto the haulage machine has been performed by the work arm. The controller is configured to: sense the work instruction via the notification device; determine a start of loading work for the haulage machine, and an end of the loading work on a basis of an operation state of the work machine at a time of the sensing of the work instruction; integrate the weight of the work target object that has been measured from the start of the loading work until the end of the loading work, and calculate a loaded amount of the haulage machine; and output the loaded amount to an external terminal at the end of the loading work.

Advantages of the Invention

According to the present invention, it becomes possible to accurately calculate a loaded amount of a haulage machine.

Brief Description of the Drawings

FIG. 1 is an external view illustrating a configuration example of a work machine according to an embodiment of the present invention.

FIG. 2 is a schematic diagram illustrating the system configuration of a controller of the work machine according to the embodiment of the present invention.

FIG. 3 is a bird's eye view illustrating one example of loading work performed by the work machine.

FIG. 4A is a flowchart illustrating a method of determining a start and end of loading work based on a calculation of a loaded amount of a haulage machine 2, a work instruction signal and the posture of the work machine, at the controller (controller) according to the embodiment of the present invention.

FIG. 4B is a flowchart illustrating the method of determining the start and end of the loading work based on the calculation of the loaded amount of the haulage machine 2, the work instruction signal and the posture of the work machine, at the controller (controller) according to the embodiment of the present invention.

FIG. 5 is a graph illustrating the posture and a load of the work machine used for determinations of an excavation step, an excavation step, and a loading step, at the controller according to the embodiment of the present invention.

FIG. 6 is a side view of the work machine illustrating a hauled-weight calculation model used at the controller according to the embodiment of the present invention.

FIG. 7 includes side views of the work machine and a haulage machine illustrating a model used for determinations of a start and end of loading work, at the controller of the work machine according to the embodiment of the present invention.

FIG. 8 is an external view illustrating one example of an output screen of the work machine according to the embodiment of the present invention.

FIG. 9A is a flowchart illustrating a method performed by the work machine according to the embodiment of the present invention to determine a start and end of loading work by using stop time of the work machine at an excavation step.

FIG. 9B is a flowchart illustrating the method performed by the work machine according to the embodiment of the present invention to determine the start and end of the loading work by using the stop time of the work machine at the excavation step.

FIG. 10 is a flowchart illustrating a method performed by the work machine according to the embodiment of the present invention to determine a start and end of loading work by using the height of a work device at a loading step.

FIG. 11 includes side views of the work machine and a haulage machine illustrating a model used by the work machine according to the embodiment of the present invention to determine a start and end of loading work.

FIG. 12 is a flowchart illustrating a method performed by the work machine according to an embodiment of the present invention to determine a start and end of loading work by using an implementation time of each type of work and a loaded amount at a loading cycle.

FIG. 13 is a graph illustrating calculation results of a hauled weight, a loaded amount, a haulage flag Fcry and a loading flag Fload that are calculated by the controller of the work machine according to the embodiment of the present invention during loading work.

FIG. 14 is a schematic diagram illustrating the system configuration of the work machine according to the embodiment of the present invention.

FIG. 15 is a flowchart illustrating a method performed by the controller of the work machine according to the embodiment of the present invention to identify a haulage machine by using results of determinations of starts and ends of loading work by a loading period determining section, and results of estimations of starts and ends of loading work by a haulage-machine loading-period estimating section.

FIG. 16 is a top view illustrating a positional relations between the work machine and haulage machines during loading work, illustrating a model to be used by the controller of the work machine according to the embodiment of the present invention to estimate loading periods of a plurality of haulage machines.

FIG. 17 is a graph illustrating results of determinations of starts and ends of loading work by the loading period determining section of the controller of the work machine according to the embodiment of the present invention, and results of estimations of starts and ends of loading work by the haulage-machine loading-period estimating section of the controller of the work machine.

FIG. 18 is a schematic diagram illustrating the system configuration of the work machine according to the embodiment of the present invention.

FIG. 19 is a flowchart illustrating a method performed by the controller of the work machine according to the embodiment of the present invention to determine time required for loading work or replacement of haulage machines, and output a warning when the work time is lengthy.

FIG. 20 is an external view illustrating one example of an output screen of the work machine according to the embodiment of the present invention, and an output screen for a manager installed in a management building.

Modes for Carrying Out the Invention

In the following, embodiments of the present invention are explained by using the figures. In the following cases explained, a hydraulic excavator is used as a loading machine included in a weight measurement system of a work machine, and dump trucks are used as haulage machines.

Work machines (loading machines) which are target machines of the present invention are not limited to hydraulic excavators having buckets as attachments (work devices), but also include hydraulic excavators having grapples, lifting magnets or the like that are capable of holding/releasing work target objects. In addition, the present invention can also be applied to wheel loaders and the like including work arms not having swing functionalities unlike hydraulic excavators.

<First Embodiment>

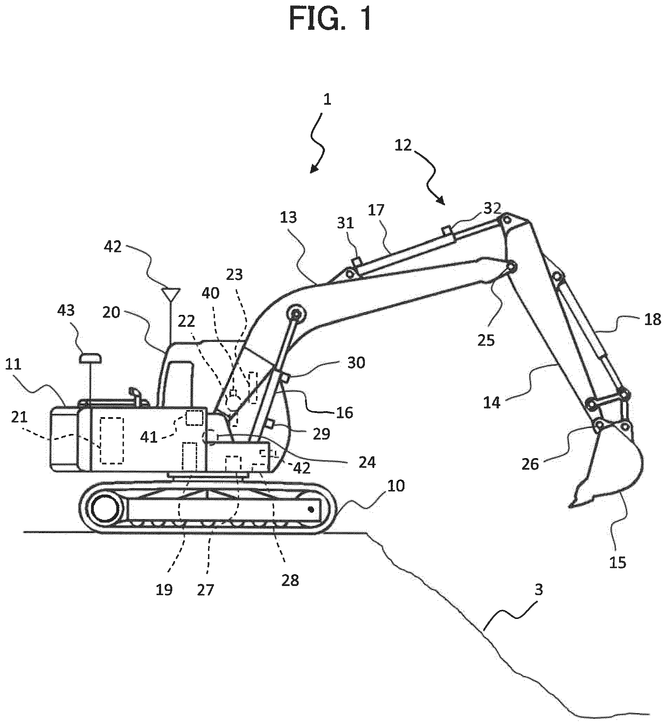

FIG. 1 is a side view of a hydraulic excavator according to the present embodiment. A hydraulic excavator 1 in FIG. 1 includes: a lower travel structure 10; an upper swing structure 11 provided swingably on an upper section of the lower travel structure 10; a front work implement 12 which is an articulated-type work arm mounted on the front side of the upper swing structure 11; a swing motor 19 which is a hydraulic motor that pivots the upper swing structure 11; an operation room (cab) 20 which is provided on the upper swing structure 11 and is a space where an operator gets on to operate the excavator 1; an operation lever (operation device) 22 which is provided in the operation room 20 and used for controlling the operation of actuators mounted on the hydraulic excavator 1; and a controller (controller) 21 that has a storage device (e.g. a ROM and a RAM), a calculation processing device (e.g. a CPU), and an input/output device, and controls the operation of the hydraulic excavator 1.

The front work implement 12 includes: a boom 13 pivotably provided on the upper swing structure 11; an arm 14 pivotably provided at the tip of the boom 13; and a bucket (attachment) 15 pivotably provided at the tip of the arm 14. In addition, as actuators to drive the front work implement 12, the front work implement 12 includes: a boom cylinder 16 that is a hydraulic cylinder to drive the boom 13; an arm cylinder 17 that is a hydraulic cylinder to drive the arm 14; and a bucket cylinder 18 that is a hydraulic cylinder to drive the bucket 15.

A boom-angle sensor 24, an arm-angle sensor 25, and a bucket-angle sensor 26 that are posture sensors are attached to the pivot axes of the boom 13, the arm 14, and the bucket 15, respectively. Angles of pivot motion of the boom 13, the arm 14 and the bucket 15 can be acquired from these angle sensors 24, 25 and 26, respectively. In addition, a swing-angular-velocity sensor (e.g. a gyroscope) 27 and an inclination angle sensor 28 are attached to the upper swing structure 11, and are configured to be able to acquire the swing angular velocity of the upper swing structure 11, and the forward/backward-direction inclination angle of the upper swing structure 11, respectively. Postural data to identify the posture of the front work implement 12 can be acquired from sensed values of the angle sensors 24, 25, 26, 27, and 28.

A boom-bottom-pressure sensor 29 and a boom-rod-pressure sensor 30, and an arm-bottom-pressure sensor 31 and an arm-rod-pressure sensor 32 that are load sensors are attached to the boom cylinder 16 and the arm cylinder 17, respectively, and are each configured to be able to acquire the pressure inside a hydraulic cylinder. Driving force data to identify a thrust of each cylinder 16 or 18, that is, a driving force applied to the front work implement 12, and load data to identify a load on each cylinder 16 or 18 can be acquired from sensed values of the pressure sensors 29, 30, 31 and 32. Note that similar pressure sensors may be provided also on the bottom side and rod side of the bucket cylinder 18, and driving force data and load data about the bucket cylinder 18 may be acquired to be used for various types of control.

Note that the boom-angle sensor 24, the arm-angle sensor 25, the bucket-angle sensor 26, the inclination angle sensor 28, and the swing-angular-velocity sensor 27 can be replaced with other sensors as long as those sensors can sense physical quantities from which postural data about the front work implement 12 can be computed. For example, each of the boom-angle sensor 24, the arm-angle sensor 25, and the bucket-angle sensor 26 can be replaced with an inclination angle sensor or an inertial measurement unit (IMU). In addition, the boom-bottom-pressure sensor 29, the boom-rod-pressure sensor 30, the arm-bottom-pressure sensor 31, and the arm-rod-pressure sensor 32 can be replaced with other sensors as long as those sensors can sense physical quantities from which data about thrusts generated by the boom cylinder 16 and the arm cylinder 17, that is, a driving force applied to the front work implement 12, and load data about each cylinder 16 and 17 can be computed. Furthermore, instead of or in addition to sensing of thrusts, driving forces, and loads, operation velocities of the boom cylinder 16 and the arm cylinder 17 may be sensed by stroke sensors, or operation velocities of the boom 13 and the arm 14 may be sensed by IMUs, to thereby sense operation of the front work implement 12.

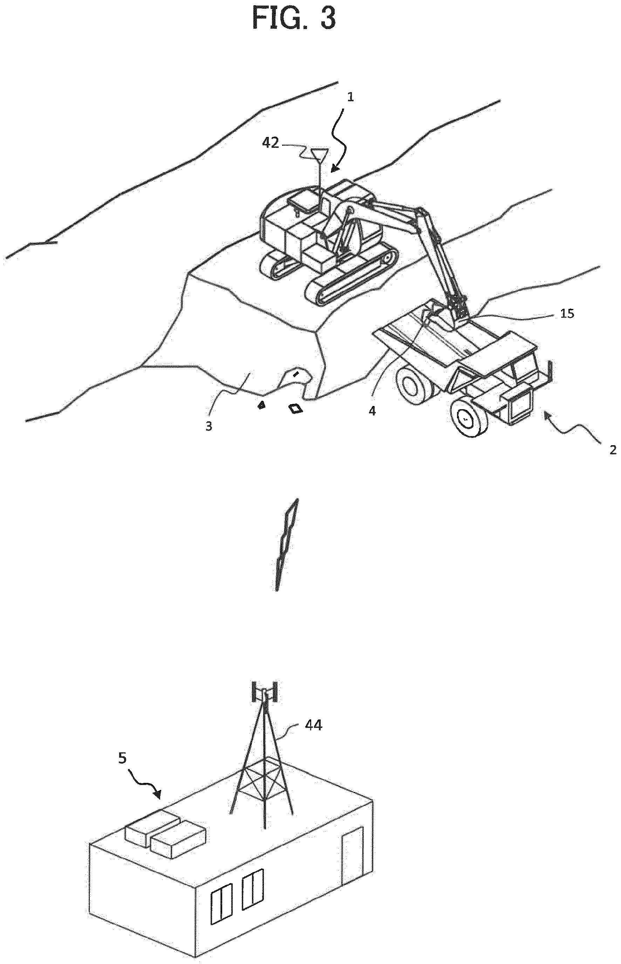

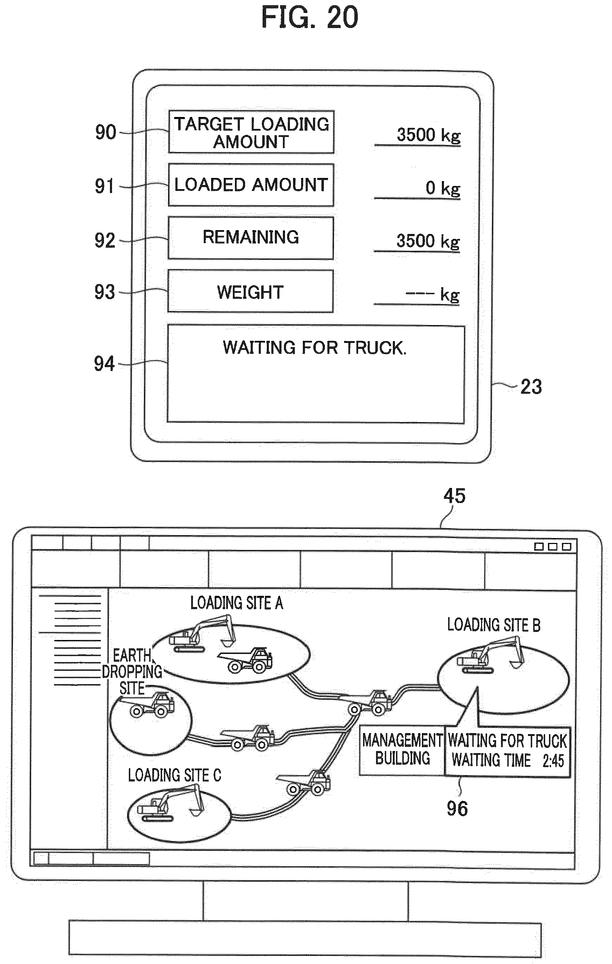

A monitor (display device) 23 that displays results of calculations by the controller 21 (e.g. a hauled weight which is the weight value of a work target object 4 in the bucket 15 calculated by a weight calculating section 50 mentioned below, and a loaded amount of a haulage machine which is an integrated value of the hauled weight), and the like, and the operation lever 22 for giving instructions about operation of the front work implement 12, and the upper swing structure 11 are installed inside the operation room 20. An external communication device 42 used by the controller 21 for communicating with a terminal such as an external computer (e.g. a controller mounted on a dump truck 2 (see FIG. 3) which is a haulage machine, a computer (not illustrated), or a management monitor 45 (see FIG. 20) installed in a management building 5 (see FIG. 3), and the like) is attached on the top surface of the upper swing structure 11.

The monitor 23 according to the present embodiment has a touch panel, and functions also as an input device used by an operator to input information to the controller 21. For example, a liquid crystal display having a touch panel can be used as the monitor 23.

The operation lever 22 has: a first lever (not illustrated) for giving instructions about raising/lowering of the boom 13 (expansion/contraction of the boom cylinder 16), and dumping/crowding of the bucket 15 (expansion/contraction of the bucket cylinder 18); and a second lever (not illustrated) for giving instructions about dumping/crowding of the arm 14 (expansion/contraction of the arm cylinder 17), and left/right swings of the upper swing structure 11 (left/right turns of the hydraulic motor 19). The first and second levers are dual combined multi-functionality operation levers. Forward/backward operation of the first lever corresponds to raising/lowering of the boom 13, and left/right operation of the first lever corresponds to crowding/dumping of the bucket 15. Forward/backward operation of the second lever corresponds to dumping/crowding of the arm 14, and left/right operation of the second lever corresponds to left/right turns of the upper swing structure 11. If a lever is operated in a diagonal direction, two corresponding actuators are operated simultaneously. In addition, operation amounts of the first and second levers determine operation velocities of the actuators 16 to 19.

In addition, the upper swing structure 11 further includes: a horn 41 that is a notification device for giving notification of work instructions by cues using horn sounds to haulage machines (dump trucks) 2 (more specifically, stop instructions to the haulage machines 2 accompanying starts of loading work, and departure instructions to the haulage machines 2 accompanying ends of the loading work); the external communication device 42 that is one of communication devices for exchanging data (hauled weights and loaded amounts) related to a weight of the work target object 4 with a machine other than the hydraulic excavator 1, and also is a haulage-machine-data acquiring device for exchanging data about operation or positions related to the haulage machine 2; and an antenna (positional-measurement data acquiring device) 43 for receiving signals from a plurality of GNSS satellites. The inside of the operation room 20 further includes a horn switch (work instruction switch) 40 that operates the horn 41 when triggered by operation of the switch 40.

Note that cues used for work instructions are not limited only to sound generation of horn sounds by the horn 41 mentioned above, but any configuration, like the flashing of light or buzzer signals via the external communication device 42, may be adopted as long as it is possible to notify operators of the haulage machines 2 whether or not there are cues. In addition, the horn switch 40 may be other hardware as long as it is configured as an interface by which it is possible to give instructions as to whether or not there is a cue, like a switch attached onto the operation lever 22, or a foot switch attached onto the floor surface of the operation room 20.

- Controller 21 -

The controller 21 includes a calculation processing device (e.g. a CPU), a storage device (e.g. a semiconductor memory such as a ROM or a RAM), and an interface (input/output device), and executes a program (software) stored in advance on the storage device by using the calculation processing device. On the basis of set values defined in the program, and signals input through the interface, the calculation processing device performs a calculation process, and outputs a signal (calculation result) through the interface.

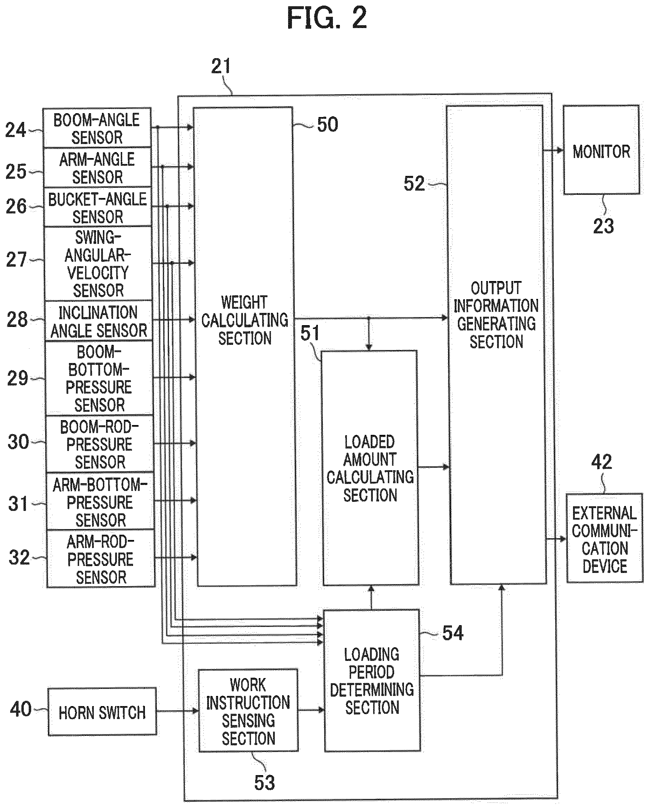

FIG. 2 is a schematic diagram illustrating an example of the system configuration inside the controller 21, which is a controller of the hydraulic excavator 1 according to the present invention. The system inside the controller 21 is executed as a combination of several programs. The controller 21 is configured to: receive inputs of signals of the sensors 24 to 32 via the interface, and an instruction signal of the horn switch 40; implement a process at the calculation processing device; thereafter calculate a weight (hauled weight) of the work target object 4, and cause the weight value to be displayed on the monitor 23 via the interface; and transmit a loaded amount of a haulage machine 2 to an external terminal via the external communication device 42.

The inside of the controller 21 in FIG. 2 illustrates a block diagram of functionalities of programs implemented by the controller 21. The controller 21 includes: the weight calculating section 50 that determines a step at a loading cycle (in other words, operation of the front work implement 12) (specifically, an excavation step, a haulage step, or a loading step) on the basis of postural data about the front work implement 12, and load data about at least one of the actuators 16 and 17, and calculates (measures) a hauled weight which is a weight value of the work target object 4 during a haulage step; a work instruction sensing section 53 that senses that an work instruction via the horn (notification device) 41 is being output, on the basis of an output signal of the horn switch 40; a loading period determining section 54 that determines a timing (loading-work start timing) at which a loading step at the initial loading cycle of loading work for a certain haulage machine 2 has been executed, and a timing (loading-work end timing) at which a loading step at the last loading cycle has been executed, on the basis of the operation state of the hydraulic excavator 1 at the time of the sensing of the work instruction by the work instruction sensing section 53; a loaded amount calculating section 51 that integrates the hauled weight of the work target object 4 calculated (measured) at the weight calculating section 50 from the timing determined as the initial loading step by the loading period determining section 54 until the timing determined as the last loading step by the loading period determining section 54, and calculates the integrated hauled weight as the loaded amount of the haulage machine 2; and an output information generating section 52 that generates information to be displayed on the monitor 23, and information to be transmitted to the external communication device 42, on the basis of outputs (calculation results) of the weight calculating section 50, the loaded amount calculating section 51, and the loading period determining section 54.

- Processes Performed by Loading Period Determining Section 54 -

In the method explained next by using FIG. 3 to FIG. 8, on the basis of the operation state of the front work implement 12 (the posture and height of the bucket 15) acquired at the time when a work instruction is output from the horn 41, the loading period determining section 54 in the controller 21 according to the present embodiment determines a start timing (a timing of a loading step at the initial loading cycle) and an end timing (a timing of a loading step at the last loading cycle) of loading work for one haulage machine 2.

FIG. 3 is a bird's eye view of loading work by the hydraulic excavator 1 for a haulage machine (dump truck) 2. As illustrated in FIG. 3, generally, the hydraulic excavator 1 repeatedly implements a loading cycle including (1) to (3), makes the cargo bed of the haulage machine 2 full of the work target object, and completes the loading work for the one haulage machine. (1) is an "excavation step" at which an excavation target 3 is excavated, and fills the inside of the bucket 15 with the work target object 4. (2) is a "haulage step" at which, after the excavation step, the upper swing structure 11 is swung, and the bucket 15 is moved to a position above the cargo bed of the haulage machine 2. (3) is a "loading step" at which, after the haulage step, dumping operation of the bucket 15 above the cargo bed is performed to release the work target object 4 onto the cargo bed of the haulage machine 2, and the bucket 15 is moved to an excavation start position where the work target object 4 is present. By monitoring the loaded amount at the time when the cargo bed of the haulage machine 2 is made full of the work target object 4, it becomes possible for a manager of the work site to grasp the day-to-day results and progress, and the overall results and progress from the day of the start of the work.

At each haulage step, the controller 21 (weight calculating section 50) calculates a weight value (hauled weight) of the work target object 4 being hauled by the bucket 15. Then, every time loading work for one haulage machine 2 ends, the controller 21 (loaded amount calculating section 51) transmits the loaded amount of the haulage machine 2 obtained by integrating the hauled weight of the work target object 4 to an unillustrated computer installed in the management building 5 via the external communication device 42 provided to the hydraulic excavator 1, and a communication antenna 44 for management provided at the management building 5. At this time, if a hauled weight other than the work target object 4 loaded onto one haulage machine 2 is integrated mistakenly (e.g. not only a hauled weight for the current haulage machine, but also a hauled weight in loading work for the previous haulage machine is integrated mistakenly), the loaded amount becomes inaccurate, and it becomes impossible to correctly output the loaded amount. That is, the controller 21 is supposed to integrate only the weight of the work target object 4 at loading steps having been implemented for one haulage machine. With the configuration of the hydraulic excavator 1 mentioned earlier, and the method explained below, the present invention makes it possible to easily integrate only a weight having been loaded onto a haulage machine 2.

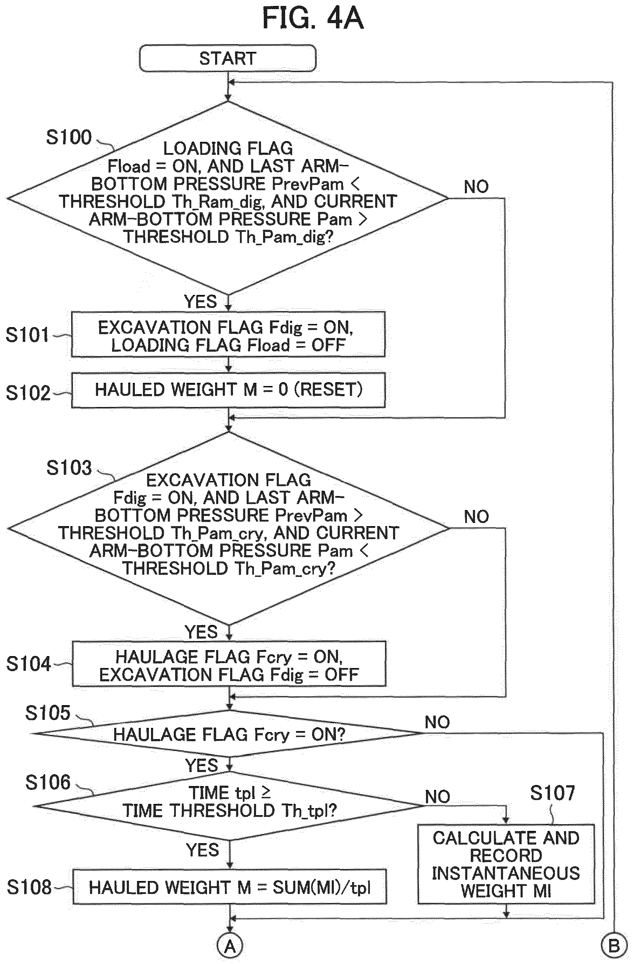

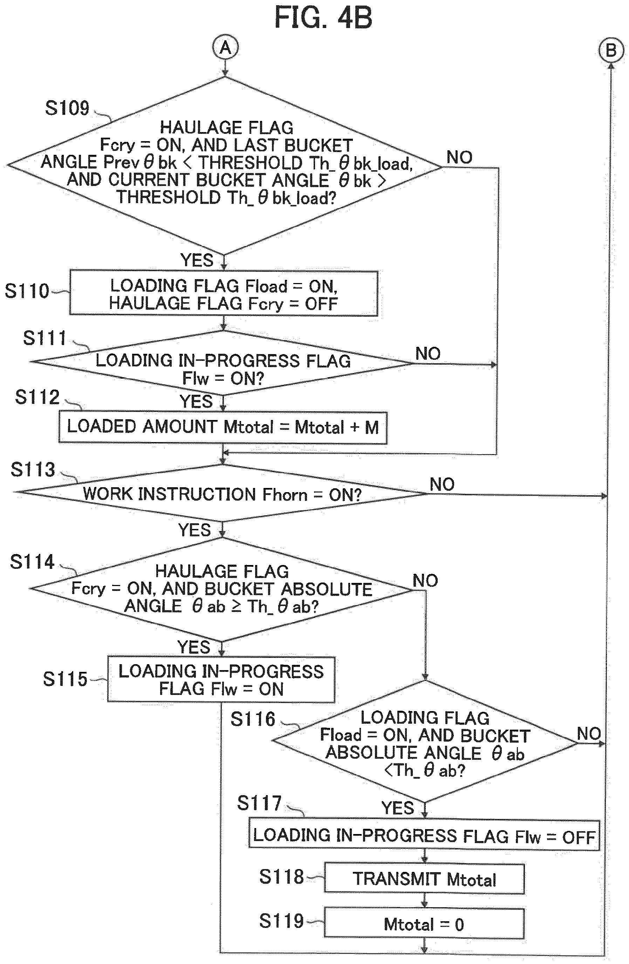

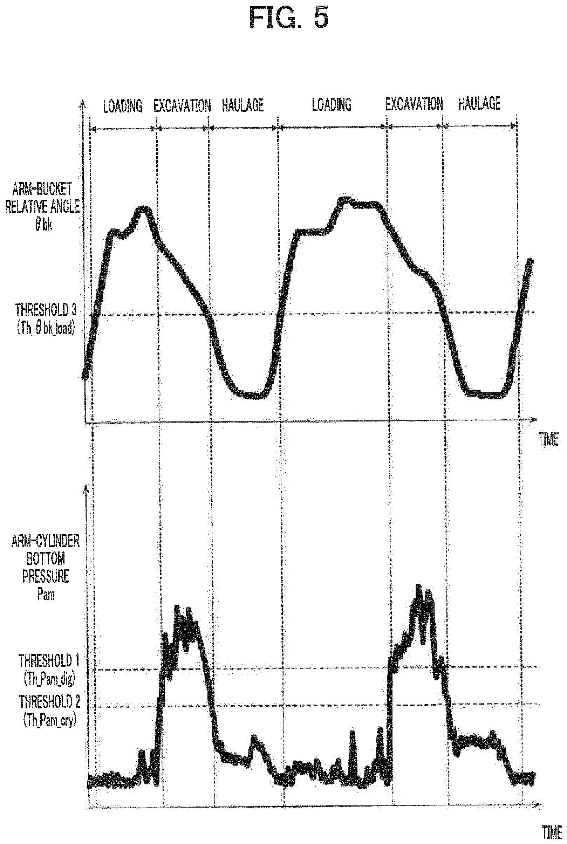

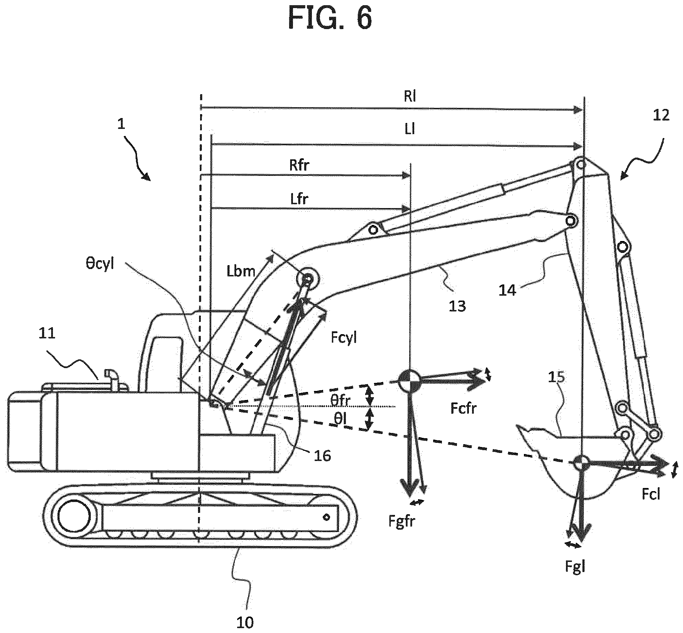

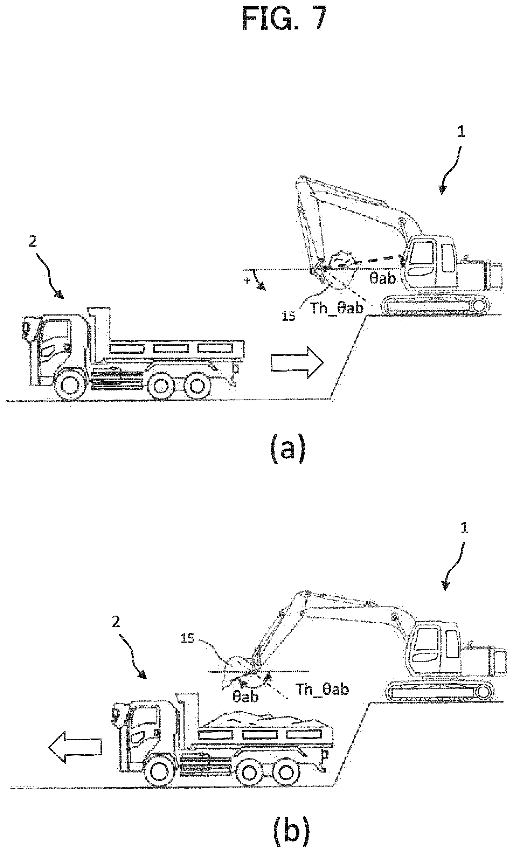

FIG. 4A and FIG. 4B (FIG. 4) are flowcharts illustrating a method in which a hauled weight of the work target object 4 is calculated, a loaded amount of a haulage machine 2 is calculated, and a start and end of loading work are determined on the basis of a work instruction signal and the posture of the hydraulic excavator 1, in processes of the programs executed inside the controller 21. FIG. 5 is a graph illustrating the posture and a load of the hydraulic excavator 1 used for determining an excavation step, an excavation step and a loading step in a process of the weight calculating section 50. FIG. 6 is a side view of the hydraulic excavator 1 illustrating a hauled-weight calculation model used in the process of the weight calculating section 50. FIG. 7 includes side views of the hydraulic excavator 1 and a haulage machine 2 illustrating a model used for determining a start and end of loading work in a process of the loading period determining section 54. In the method explained by using FIG. 4 to FIG. 7, the loaded amount calculating section 51 integrates a hauled weight measured by the weight calculating section 50 during a haulage step, and calculates a loaded amount of a haulage machine 2, and the loading period determining section 54 determines a start and end of loading work on the basis of the posture of the hydraulic excavator 1 calculated from an output of the work instruction sensing section 53 and outputs of the sensors 24 to 28.

Each step in FIG. 4A and FIG. 4B is executed at predetermined sampling intervals at the controller 21. In addition, the storage device (memory) in the controller 21 retains therein an excavation flag Fdig, a haulage flag Fcry, and a loading flag Fload as state quantities representing a work step being implemented by the hydraulic excavator 1 in loading work. Note that the initial states of the excavation flag Fdig, the haulage flag Fcry, and the loading flag Fload are set to OFF, OFF, and ON, respectively. Furthermore, the storage device in the controller 21 retains a loading in-progress flag Flw as a state quantity representing whether or not the hydraulic excavator 1 is performing loading work. The initial value of the loading in-progress flag Flw is set to OFF.

When the flowchart illustrated in FIG. 4A is started, at Step S100, the controller 21 (weight calculating section 50) determines whether or not the loading flag Fload is ON, an output PrevPam (last arm-bottom pressure) of the arm-bottom-pressure sensor 31 in the previous sampling instance is lower than a threshold Th_Pam_dig that is set in advance on the memory, and a current output Pam (current arm-bottom pressure) of the arm-bottom-pressure sensor 31 is higher than the threshold Th_Pam_dig. Since the hydraulic excavator 1 performs excavation by pushing the arm cylinder 17 out, as illustrated in the graph of the arm-cylinder bottom pressure Pam in FIG. 5, the arm-cylinder bottom pressure Pam increases during excavation. Accordingly, if it is determined that the arm bottom pressure has exceeded the threshold Th_Pam_dig, it can be decided that an excavation step has started. When it is not determined that an excavation step has started, the process skips to Step S103. When it is determined that an excavation step has started, the process proceeds to Step S101, the excavation flag Fdig is set to ON, the loading flag Fload is set to OFF, and the process proceeds to Step S102.

At Step S102, the controller 21 (weight calculating section 50) resets a hauled weight M that is calculated at Step S108 mentioned below, and is retained on the memory to 0, and proceeds to Step S103.

At Step S103, the controller 21 (weight calculating section 50) determines whether or not the excavation flag Fdig retained on the memory is ON, the output PrevPam (last arm-bottom pressure) of the arm-bottom-pressure sensor 31 in the previous sampling instance is higher than a threshold Th_Pam_cry that is set in advance on the memory, and the current output Pam (current arm-bottom pressure) of the arm-bottom-pressure sensor 31 is lower than the threshold Th_Pam_cry. As illustrated in the graph of the arm-cylinder bottom pressure Pam in FIG. 5, the arm-cylinder bottom pressure Pam decreases when the excavation step ends. Accordingly, if it is determined that the arm bottom pressure has fallen below the threshold Th_Pam_cry, it can be decided that the excavation step has ended, and a haulage step has started. When it is not determined an excavation step has started, the process skips to Step S105. When it is determined that an excavation step has started, the process proceeds to Step S104, the haulage flag Fcry is set to ON, the excavation flag Fdig is set to OFF, a measurement of time tpl since the time at which the haulage flag Fcry is set to ON is started, and the process proceeds to Step S105. Note that the example about the threshold Th_Pam_dig and the threshold Th_Pam_cry illustrated in FIG. 6 is merely one example, the threshold Th_Pam_dig and the threshold Th_Pam_cry are set to any values by which a start and end of an excavation step can be determined, within a range that is equal to or higher than an average pressure during work of the hydraulic excavator 1 other than excavation steps.

At Step S105, the controller 21 (weight calculating section 50) determines whether or not the haulage flag Fcry is ON. When the haulage flag Fcry has not been set to ON, the process skips to Step S109. When the haulage flag Fcry is ON, the process proceeds to Step S106.

At Step S106, the controller 21 (weight calculating section 50) determines whether or not the time tpl that has elapsed since the haulage flag Fcry has been set to ON is equal to or longer than a time threshold Th_tpl. When the time tp1 is not longer than the time threshold Th_tpl, the process proceeds to Step S107.

At Step S107, the controller 21 (weight calculating section 50) calculates an instantaneous weight (work-target-object weight) Ml of the work target object 4, and records the work-target-object weight Ml in chronological order. The instantaneous work-target-object weight MI is calculated according to a known method. For example, as illustrated in FIG. 6, the balance among torque that acts around the pivot axis of the boom 13 and is generated by a thrust of the boom cylinder 16, torque that is generated by gravity and a swing centrifugal force of the front work implement 12, and torque that is generated by gravity and a swing centrifugal force of the work target object 4 is used. A thrust Fcyl of the boom cylinder 16 is computed according to the following Formula (1) where an output signal of the boom-bottom-pressure sensor 29 is Pbm1, an output signal of the boom-rod-pressure sensor 30 is Pbm2, and the pressure-receiving areas of the boom cylinder 16 are A1 and A2.

$$\text{Fcyl} = \text{A1} \cdot \text{Pbm1} - \text{A2} \cdot \text{Pbm2} \ \ldots \ (1)$$

Torque Tbm generated by the boom cylinder 16 is computed according to the following Formula (2) where the length of a line segment linking the boom pivot axis, and the point of action of the thrust of the boom cylinder 16 is Lbm, the thrust of the boom cylinder 16 is Fcyl, and the angle formed between the line segment Lbm and the direction of the thrust is θcyl.

$$\text{Tbm} = \text{Fcyl} \cdot \text{Lbm} \cdot \sin(\theta\text{cyl}) \ \ldots \ (2)$$

Torque Tgfr generated by gravity of the front work implement 12 is computed according to the following Formula (3) where the centroid weight of the front work implement 12 is Mfr, the gravitational acceleration is g, the length in the forward/backward direction from the boom pivot axis to the front-implement centroid is Lfr, the angle formed between the horizontal plane and a line segment linking the boom pivot axis and the front-implement centroid is θfr.

$$\text{Tgfr} = \text{Mfr} \cdot \text{g} \cdot \text{Lfr} \cdot \cos(\theta\text{fr}) \ \ldots \ (3)$$

Torque Tcfr generated to the front work implement 12 by a swing centrifugal force is computed according to the following Formula (4) where the length in the forward/backward direction from the swing center of the upper swing structure 11 to the front-implement centroid is Rfr, and a swing angular velocity is ω.

$$\text{Tcfr} = \text{Mfr} \cdot \text{Rfr} \cdot \omega^2 \cdot \text{Lfr} \cdot \sin(\theta\text{fr}) \ \ldots \ (4)$$

Note that Mfr, Lfr, Rfr, and θfr are computed from the preset length, centroid position and weight of each of the upper swing structure 11, the boom 13, the arm 14, and the bucket 15, and angle signals output from the boom-angle sensor 24, the arm-angle sensor 25, and the bucket-angle sensor 26. Torque Tgl generated to the work target object by gravity is computed according to the following Formula (5) where the work-target-object weight is MI, the length in the forward/backward direction from the boom pivot axis to the bucket centroid is Ll, and the angle formed between the horizontal plane and a line segment linking the boom pivot axis and the centroid of the work target object is θl.

$$\text{Tgl} = \text{Ml} \cdot \text{g} \cdot \text{Ll} \cdot \cos(\theta\text{l}) \ \ldots \ (5)$$

Torque Tcl generated to the work target object by a swing centrifugal force is computed according to following Formula (6) where the length in the forward/backward direction from the swing center of the upper swing structure 11 to the bucket centroid is Rl.

$$\text{Tcl} = \text{Ml} \cdot \text{Rl} \cdot \omega^2 \cdot \text{Ll} \cdot \sin(\theta\text{l}) \ \ldots \ (6)$$

By modifying the balance of each type of torque acting around the pivot axis of the boom 13 illustrated in Formulae (2) to (6), and expanding them for the work-target-object weight MI, the work-target-object weight MI is computed according to the following Formula (7).

$$Ml = (Tbm-Tgfr-Tcfr)/$$

$$(Ll \cdot (g \cdot cos(\theta l) + Rl \cdot \omega^2 \cdot sin(\theta l))) \ \ldots \ (7)$$

In the calculation of the work-target-object weight according to Formulae (1) to (7), the work-target-object weight Ml always fluctuates, and does not become a constant value due to noise of sensors, characteristic of hydraulic circuits and the like. Accordingly, the average of the instantaneous work-target-object weight Ml recorded at Step S107 until the time tpl reaches the time threshold Th_tpl is determined to be used as the hauled weight M.

Meanwhile, when, at Step S106, the time tpl that has elapsed since the haulage flag Fcry has been set to ON is longer than the time threshold Th_tpl stored in advance on the memory, the process proceeds to Step S108.

At Step S108, the controller 21 (weight calculating section 50), on the basis of the record of the instantaneous work-target-object weight Ml, calculates the hauled weight M which is the average of the instantaneous work-target-object weight Ml by dividing the total of the instantaneous work-target-object weight Ml by the time tpl that has elapsed since the haulage flag Fcry has been set to ON, outputs the hauled weight M, and proceeds to Step S109.

At Step S109, the controller 21 (weight calculating section 50) determines whether or not the haulage flag Fcry is ON, an arm-bucket relative angle Prev$\theta$bk (last bucket angle) which is an output of the bucket-angle sensor 26 in the previous sampling instance is smaller than a preset threshold Th_0bk_load, and a current output $\theta$bk (current bucket angle) of the bucket-angle sensor 26 is larger than the threshold Th_$\theta$bk_load. As illustrated in the graph of the relative angle $\theta$bk between the arm 14 and bucket 15 in FIG. 6, the hydraulic excavator 1 widens the space between the arm 14 and the bucket 15 to release earth and sand in the bucket 15 at the time of loading, and thus the relative angle $\theta$bk between the arm 14 and the bucket 15 increases. Accordingly, if it is determined that the relative angle $\theta$bk between the arm 14 and the bucket 15 has exceeded the threshold Th_$\theta$bk_load, it can be decided that the excavation step has ended, and a loading step has started.

When it is not determined at Step S109 that a loading step has started, the process skips to Step S113. Conversely, when it is determined at Step S109 that a loading step has started, the process proceeds to Step S110, the controller 21 (loaded amount calculating section 51) sets the loading flag Fload to ON, and sets the haulage flag Fcry to OFF, and the process proceeds to Step 5111. Note that the example about the threshold Th_$\theta$bk_load illustrated in FIG. 6 is merely one example, and the threshold Th_$\theta$bk_load can be set to any value by which a start of a loading step can be determined, within a range of the arm-bucket relative angle $\theta$bk during a loading step of the hydraulic excavator 1.

At Step Sill, the controller 21 (loaded amount calculating section 51) determines whether or not the loading in-progress flag Flw is ON. When the loading in-progress flag Flw is ON, it is determined that the hydraulic excavator 1 is implementing loading work for the haulage machine 2, and, at Step S112, the hauled weight M calculated at Step S108 is added to a weight integrated value Mtotal. On the other hand, when, at Step S111, the loading in-progress flag is OFF, the process skips Step S112, and proceeds to Step S113.

At Step S113, the controller 21 (work instruction sensing section 53) determines whether or not there has been a work instruction Fhorn to the haulage machine 2 via the horn switch 40 (horn 41). When there has not been a work instruction (Fhorn is OFF), the process returns to Step S100, and the program inside the controller 21 operates such that the calculations at and after Step S100 are executed again. When there has been a work instruction (Fhorn is ON), the process proceeds to Step S114.

At Step S114, the controller 21 (loading period determining section 54) determines whether or not the haulage flag Fcry is ON, and an angle $\theta$ab (hereinafter, referred to as a "bucket absolute angle $\theta$ab" in some cases) of an opening section of the bucket 15 relative to the horizontal plane calculated from outputs of the sensor 24 to the sensor 28 is equal to or larger than an angle threshold Th_$\theta$ab recorded in advance on the memory. Note that the bucket absolute angle $\theta$ab can be calculated by adding together all the outputs of the sensor 24 to the sensor 28, for example. In this document, the crowding direction of the bucket 15 (the direction in which the bucket 15 is folded toward the operation room 20) is defined as the positive direction. As illustrated in FIG. 7, the direction of 9 o'clock, assuming that the direction vertically above the pivot of the bucket 15 is 12 o'clock, is 0, and, starting from this direction, the angle increases monotonically in the counterclockwise direction. As illustrated in (a) in FIG. 7, before loading work is started, the haulage machine 2 moves backward toward the hydraulic excavator 1 to a location where a loading step is to be performed. At that time, the hydraulic excavator 1 faces the haulage machine 2 in a state in which the hydraulic excavator 1 retains the work target object 4 such that the initial loading step can be started. Upon arrival of the haulage machine 2 at a position suited for the loading step, the hydraulic excavator 1 gives the haulage machine 2 a cue to stop via the horn 41. Accordingly, when the hydraulic excavator 1 is performing an excavation step, and there is a work instruction when the bucket absolute angle $\theta$ab is equal to or larger than the angle threshold Th_$\theta$ab at which the hydraulic excavator 1 can retain the work target object 4, it can be decided that loading work starts (a situation where a loading step at the initial loading cycle is to be implemented).

When, at Step S114, the haulage flag Fcry is ON, and the bucket absolute angle $\theta$ab is equal to or larger than the threshold Th_θab, the controller 21 (loading period determining section 54) determines that loading work starts, and the process proceeds to Step S115. At Step S115, the loading in-progress flag Flw is set to ON, it is determined thereby that the loading work has started, and the process returns to Step S100. On the other hand, when the condition is not satisfied at Step S114 (i.e. a situation where loading work is in progress or the loading work ends), the process proceeds to Step S116.

At Step S116, the controller 21 (loading period determining section 54) determines whether or not the loading flag Fload is ON, and the bucket absolute angle θab is smaller than an angle threshold THh_θab recorded in advance on the memory. As illustrated in (b) in FIG. 7, after the end of loading work, the haulage machine 2 moves forward away from a location where a loading step has been performed. At that time, the hydraulic excavator 1 gives the haulage machine 2 a cue to depart via the horn 41 in a state in which the hydraulic excavator 1 has released the work target object 4 after finishing the last loading step. Accordingly, in a case in which there is a work instruction when the hydraulic excavator 1 is performing a loading step, and the bucket absolute angle θab is smaller than the angle threshold Th_θab at which the hydraulic excavator 1 releases the work target object 4, it can be decided that the loading work ends (a situation where a loading step at the last loading cycle is implemented). When, at Step S116, the loading flag Fload is ON, and the bucket angle θab is smaller than the threshold Th_θab, the controller 21 (loading period determining section 54) determines that the loading work ends, and proceeds to Step S117.

At Step S117, after the controller 21 (loading period determining section 54) sets the loading in-progress flag Flw to OFF, and determines thereby that the loading work has ended, the controller 21 (output information generating section 52) transmits a loaded amount Mtotal via the external communication device 42 (Step S118), the controller 21 (loaded amount calculating section 51) resets the loaded amount Mtotal (Step S119), and the process returns to Step S100. Note that if the condition is not satisfied at Step S116, the process returns to Step S100.

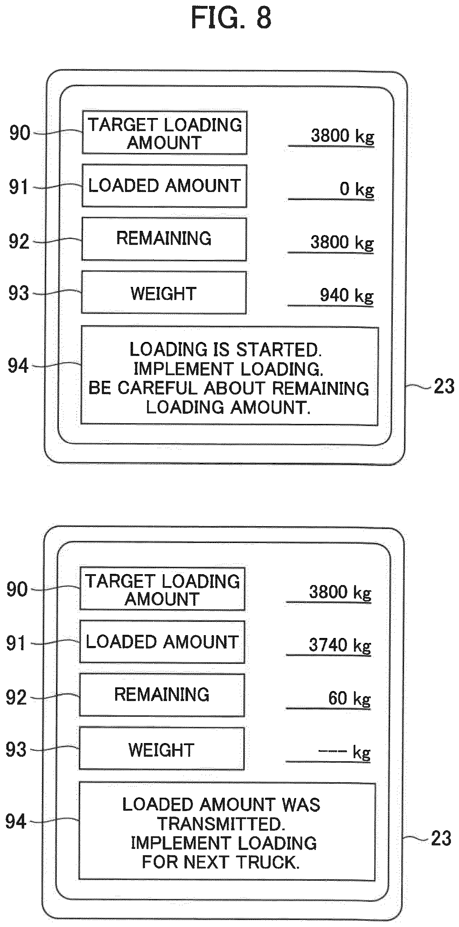

FIG. 8 is an external view illustrating an output screen of the monitor 23, which is one of output devices of the work machine according to the present invention. The screen illustrated at an upper section in FIG. 8 is an output screen displayed at the time when it is determined that loading work has started (i.e. when the loading in-progress flag Flw is set to ON at Step S115 in FIG. 4B), and the screen illustrated at a lower section in FIG. 8 is an output screen displayed when it is determined that loading work has ended (i.e. when the loading in-progress flag Flw is set to OFF at Step S117 in FIG. 4B). By using FIG. 8, an output of the output information generating section 52, and display contents related to measurement results of hauled weights are explained.

As illustrated in FIG. 8, a target-loading-amount display section 90, a loaded amount display section 91, a remaining-loading-amount display section 92, a hauled-weight display section 93, and an alert display section 94 are arranged on the screen of the monitor 23. The target-loading-amount display section 90 displays a target loading amount (kg) of a haulage machine 2 stored on the storage device in the controller 21. The loaded amount display section 91 displays a loaded amount Mtotal of the haulage machine 2 output from the loaded amount calculating section 51. The remaining-loading-amount display section 92 displays a remaining loading amount which is the difference between the loaded amount Mtotal output from the loaded amount calculating section 51, and the target loading amount. The hauled-weight display section 93 displays the hauled weight M output from the weight calculating section 50. The alert display section 94 displays an alert display based on a loading period determination output from the loading period determining section 54. At predetermined intervals, the output information generating section 52 updates the displays (numerical values, and character strings) of these sections 90 to 94 on the basis of results of calculations by the controller 21, and stored data. Note that although the loaded amount Mtotal is reset to zero immediately after the loaded amount Mtotal is transmitted to the external terminal at Step S118 in the flow in FIG. 4B, the timing at which the loaded amount on the screen of the monitor 23 is reset to zero may be made different from that in the flow in FIG. 4B. Accordingly, the loaded amount in the loaded amount display section 92 on the screen at the lower section in FIG. 8 is not zero.

As illustrated in the screen at the upper section in FIG. 8, the output information generating section 52 displays a message for prompting an operator to start loading work when loading work has started, and displays an alert display so as to prevent excessive loading of loading excessively onto the haulage machine 2. In addition, as illustrated in the screen at the lower section in FIG. 8, the output information generating section 52 displays a message for prompting the operator to end the loading work when the loading work has ended, and displays, in the alert display section 94, a character string prompting the operator to proceed to the next loading work.

- Operation/Advantages -

When loading work is started by the thus-configured hydraulic excavator 1, the result of the determination by the controller 21 at Step S100 becomes YES at the timing of an excavation step at the initial loading cycle, and the controller 21 sets the excavation flag to ON (Step S101), and resets the hauled weight M to zero (Step S102). Subsequently, the result of the determination by the controller 21 at Step S103 becomes YES at the timing of a haulage step at the initial loading cycle, and the controller 21 sets the haulage flag to ON (Step S104), and measures the elapsed time tpl that has elapsed since a time at which the haulage step has started. Until the time tpl reaches the threshold Th_tpl, the controller 21 calculates the instantaneous weight Ml repeatedly (Step S107), and, when the time tpl reaches the threshold Th_tpl, calculates the average value of the instantaneous weight Ml, and uses the average value as the hauled weight M (Step S108). At this time, as illustrated in (a) in FIG. 7, the hydraulic excavator 1 is waiting for the arrival of a haulage machine 2 in a state in which the hydraulic excavator 1 keeps the opening of the bucket 15 approximately horizontal. Accordingly, the result of the determination by the controller 21 at Step S109 becomes NO, and the process proceeds to Step S113.

Thereafter, upon the arrival of the haulage machine 2, the operator of the hydraulic excavator 1 outputs a cue to stop (work instruction) by sounding the horn 41. When the work instruction by the horn 41 is sensed, the controller 21 proceeds to Step S114 from Step S113, the result of the determination at Step S114 by the controller 21 becomes YES, and the controller 21 sets the loading in-progress flag to ON (Step S115). When the hydraulic excavator 1 performs dumping operation of the bucket 15 to start loading of the work target object onto the cargo bed of the haulage machine 2 (i.e. a loading step at the initial loading cycle), the result of the determination by the controller 21 at Step S109 becomes YES, and the controller 21 sets the loading flag Fload to ON (Step S110). Since the loading in-progress flag Flw is ON in the determination at the subsequent Step Sill, the process proceeds to Step S112, and the hauled weight M calculated at Step S108 is integrated with the loaded amount Mtotal (= zero).

From then on, a plurality of loading cycles are executed by the hydraulic excavator 1 until the cargo bed of the haulage machine 2 becomes full. At that time, the controller 21 calculates the hauled weight M at each haulage step (Step S108), and integrates the hauled weight M at each loading step, to calculate the loaded amount Mtotal.

Thereafter, when the cargo bed of the haulage machine 2 is made full of the work target object 4 as a result of a loading step at the last loading cycle as illustrated in (b) in FIG. 7, the operator of the hydraulic excavator 1 outputs a cue (work instruction) to depart to the haulage machine by sounding the horn 41. The controller 21 which has sensed the work instruction proceeds to Step S114 from Step S113, but proceeds to Step S116 because the haulage flag Fcry is OFF unlike the initial loading cycle. At Step S116, since the loading flag Fload is ON, and the bucket absolute angle $\theta ab$ is smaller than the threshold, the process proceeds to Step S117. Thereby, the controller 21 sets the loading in-progress flag to OFF (Step S117), transmits the loaded amount Mtotal to the external terminal (Step S118), resets the loaded amount Mtotal to zero (Step S119), and proceeds to loading work for the next haulage machine 2.

In the manner mentioned above, in the present embodiment, at Step S114, the step at the loading cycle at the time when a work instruction is output from the hydraulic excavator 1 to the haulage machine 2, and the operation state of the front work implement 12 are compared with each other. Thereby, it is possible to easily determine a start and end of loading work for one haulage machine 2, and it is possible to accurately calculate the loaded amount because the hauled weight M is integrated only between the start and end of the loading work.

Note that, in order to improve the precision of determinations about the loading-work start timing at Step S114 in FIG. 4B, it takes into consideration also whether or not the haulage flag Fcry is ON, in addition to the magnitude of the bucket absolute angle $\theta ab$; however, the haulage flag Fcry may be excluded from factors of consideration, and determinations may be made on the basis of only the bucket absolute angle $\theta ab$. Similarly, the loading flag Fload may be excluded from factors of consideration also at Step S116 in FIG. 4B.

In addition, although the loaded amount Mtotal is transmitted to the external terminal at Step S118 in FIG. 4B, instead of the transmission to the external terminal, the loaded amount Mtotal may only be stored on the storage device in the controller 21 or on another storage device mounted on the hydraulic excavator 1, and the transmission to the external terminal may be omitted.

<First Modification Example>

Meanwhile, the method of determining a start and end of loading work illustrated in Step S114 to Step S119 in FIG. 4B is not limited to the method mentioned before, but may be implemented in different manners.

In the present modification example, the controller 21 determines that the initial loading step in loading work for one haulage machine 2 has been performed (loading work has started) when the upper swing structure 11 has stopped in a haulage step at a loading cycle at which a work instruction has been sensed, and determines that the last loading step in the loading work for the one haulage machine 2 has been performed (the loading work has ended) when the upper swing structure 11 has not stopped (i.e. the upper swing structure 11 is swinging) in the haulage step at the loading cycle at which the work instruction has been sensed. In the following, details of this case are explained.

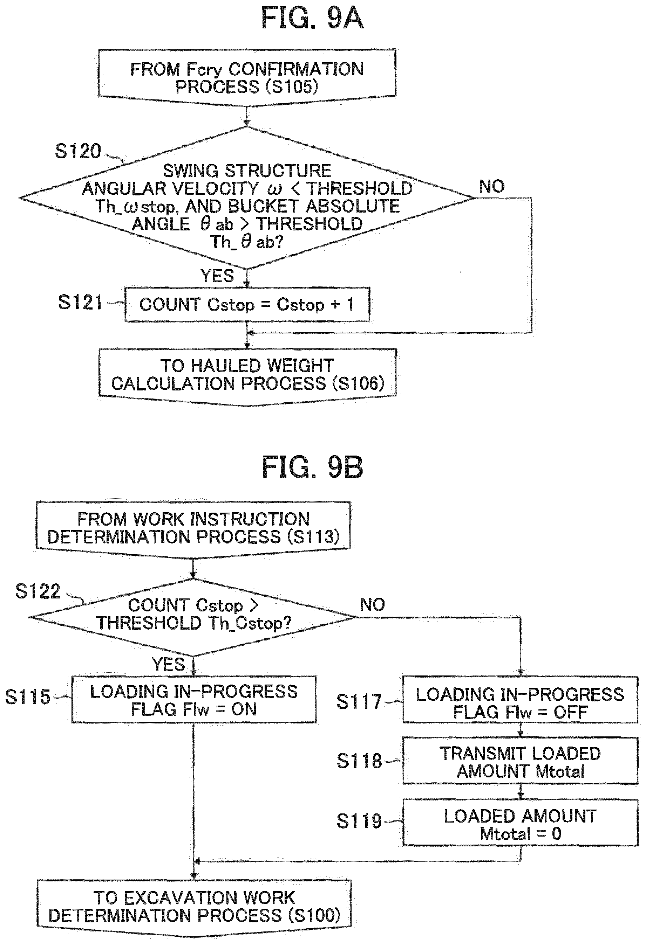

FIG. 9A and FIG. 9B are flowcharts illustrating a method of measuring a stop period of the hydraulic excavator 1 during a haulage step, and determining a start and end of loading work, in the present modification example. By using FIG. 9A and FIG. 9B, the method of determining a start and end of loading work is explained. The flowchart in FIG. 9A is inserted between Step S105 and Step S106 in FIG. 4A, and the flowchart in FIG. 9B replaces Step S114 to Step S119 in FIG. 4B.

When it is confirmed at Step S105 in FIG. 4A that the haulage flag Fcry is ON, at Step S120 in FIG. 9A, the controller 21 (loading period determining section 54) determines whether or not an angular velocity $\omega$ of the upper swing structure 11 measured by the swing-angular-velocity sensor 27 is smaller than a velocity threshold Th_$\omega$stop, and the bucket angle $\theta$ab is larger than the angle threshold Th_$\theta$ab. If the condition is satisfied, at Step S121, the controller 21 adds 1 to a count Cstop retained on the memory, and thereafter the process returns to Step S106 in FIG. 4A. If the condition is not satisfied, the process returns to Step S106 in FIG. 4A with no other processes being performed. Thereafter, the processes at Step S106 to Step S113 in FIG. 4A and FIG. 4B are implemented.

Next, when it is determined at Step S113 in FIG. 4B that there has been a work instruction from the horn switch 40 to the haulage machine 2, at Step S122 in FIG. 9B, the controller 21 determines whether or not the count Cstop calculated at Step S121 is larger than a threshold Th_Cstop. The threshold Th_Cstop can be set to 1, for example.

Typically, the hydraulic excavator 1 immediately proceeds to a haulage step after an excavation step in order to increase the efficiency of loading work, and furthermore proceeds to a loading step without stopping a swing of the upper swing structure 11 having been input during the haulage step. When the count Cstop is larger than the threshold Th_Cstop (e.g. 1), it can be decided that the hydraulic excavator 1 has stopped a swing of the upper swing structure 11 during the haulage step, and has been waiting for an entrance of a haulage machine 2 without proceeding to a loading step.

In view of this, if the condition of Step S122 is satisfied, the controller 21 proceeds to Step S115 determining that loading work has started, and otherwise proceeds to Step S117 determining that the loading work has ended.

Note that the counter Cstop retained on the memory is reset to 0 simultaneously when the hauled weight M is reset to 0 at Step S102 in FIG. 4A.

Note that the determination about a stop during an excavation step mentioned above is not limited only to a determination based on the swing velocity of the upper swing structure 11, but obviously the velocity of a pivot motion of the bucket 15 resulting from a swing, an integrate value of an amount of swing operation through the operation lever 22, and the like may also be used.

<Second Modification Example>

In the present modification example, the controller 21 determines that the initial loading step has been performed (loading work has started) when a lowest point PrevHbk of a height Hbk of the bucket claw tip at a loading step at a loading cycle at which a work instruction has been sensed is lower than a predetermined height threshold TH_Hbk, and determines that the last loading step has been performed (loading work has ended) when the lowest point PrevHbk of the height of the bucket claw tip at the loading step at the loading cycle at which the work instruction has been sensed is higher than the height threshold TH_Hbk.

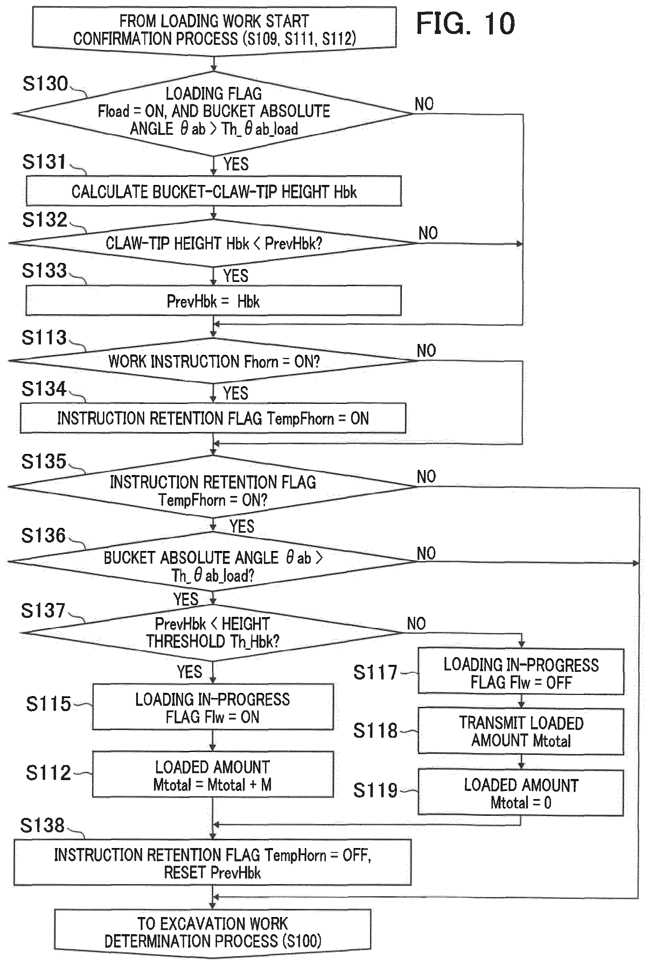

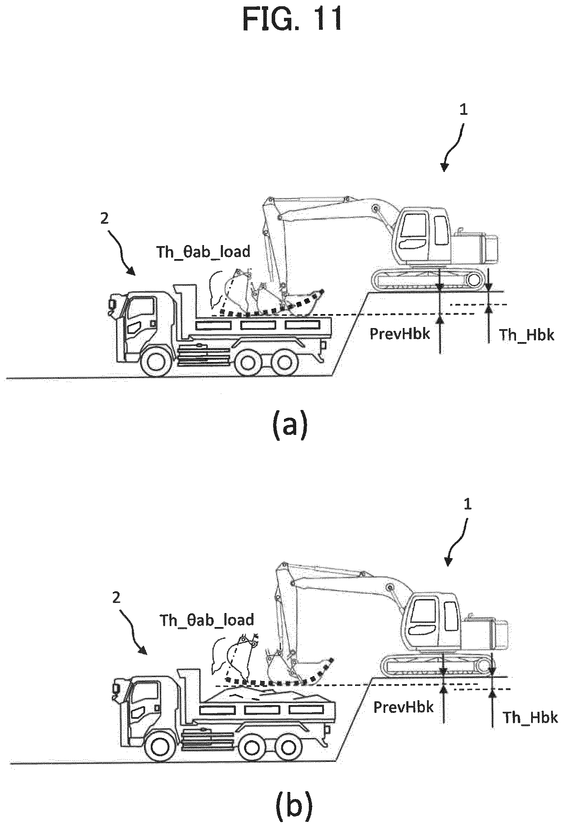

FIG. 10 is a flowchart illustrating a method of measuring the height of the bucket claw tip of the hydraulic excavator 1 during a loading step, and determining a start and end of loading work. FIG. 11 includes side views of the hydraulic excavator 1 and a haulage machine 2 illustrating a model used for determining a start and end of loading work. By using FIG. 10 and FIG. 11, the method of determining a start and end of loading work is explained.

The flowchart in FIG. 10 replaces Step S113 to Step S119 in FIG. 4B. After the confirmation of a start of a loading step has ended at Step S109 or Step S112 in FIG. 4B, the controller 21 (loading period determining section 54) determines at Step S130 whether or not the loading flag Fload is ON, and the bucket absolute angle $\theta$ab relative to the horizontal plane is larger than a threshold Th_$\theta$ab_load recorded in advance on the memory. As illustrated in FIG. 11, the threshold Th_$\theta$ab_load is set to a value slightly larger than an angle that is observed at the time of operation completion when the bucket 15 is operated so as to release the work target object 4 above the haulage machine 2. Accordingly, in the determination at Step S130, a period from the start to the end of the operation to release the work target object 4 is extracted. If the condition is not satisfied, the process skips to Step S113, and if the condition is satisfied, the process proceeds to Step S131.

At Step S131, the controller 21 calculates the height Hbk of the bucket claw tip. Hbk is calculated by using the dimensions of the hydraulic excavator 1 and the front work implement 12 recorded in advance on the memory of the controller 21, and signals of the boom-angle sensor 24, the arm-angle sensor 25, and the bucket-angle sensor 26. The height of the bottom surface of the lower travel structure 10 is defined as 0, and the upward direction of the hydraulic excavator 1 is defined as the positive direction.

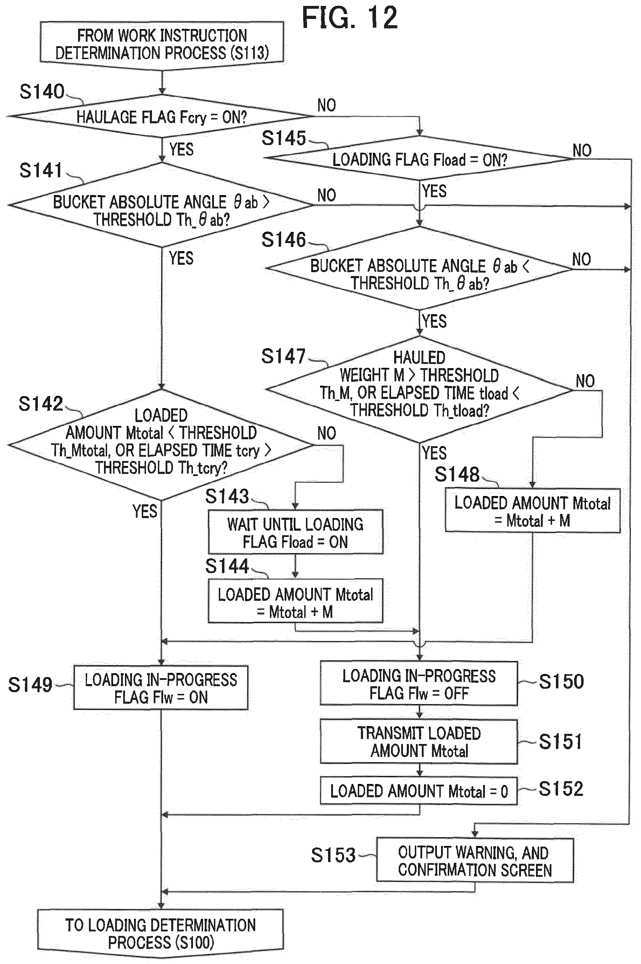

After Hbk is calculated at Step S131, at Step S132, the controller 21 determines whether or not Hbk is smaller than PrevHbk retained on the memory at Step S133 mentioned below. An initial value (0 in the present embodiment) larger than the height threshold is determined for PrevHbk. When Hbk is higher than PrevHbk, the process skips to Step S113. When Hbk is lower than PrevHbk, at Step S133, PrevHbk retained on the memory is overwritten with Hbk, and the process proceeds to Step S113. In these processes at Step S132 and Step S133, as illustrated in FIG. 12, the lowest point of the claw-tip height Hbk of the bucket 15 in a period from the start to the end of operation (bucket-dumping operation) of releasing the work target object 4 at a loading step is extracted.

At Step S113, the controller 21 determines whether or not there has been the work instruction Fhorn from the horn switch 40 to the haulage machine 2. When there has been the work instruction, at Step S134, an instruction retention flag TempFhorn indicating that there has been the work instruction is set to ON, and otherwise the process proceeds to S135.

At Step S135, the controller 21 determines whether or not the instruction retention flag TempFhorn is ON. When the instruction retention flag TempFhorn is not ON, the process skips to Step S100, and when the instruction retention flag TempFhorn is ON, the process proceeds to Step S136.

At Step S136, the controller 21 determines whether or not the bucket absolute angle $\theta$ab relative to the horizontal plane is larger than the threshold Th_$\theta$ab_load recorded in advance on the memory. That is, it is determined whether or not operation of releasing the work target object 4 has ended. If the condition is not satisfied, the process skips to Step S100, and if the condition is satisfied, the process proceeds to Step S137.

At Step S137, the controller 21 determines whether or not PrevHbk retained on the memory during loading step is lower than the height threshold Th_Hbk recorded in advance on the memory. As illustrated in (a) in FIG. 11, the work target object 4 has not been put on the haulage machine 2 at the start of loading work (the initial loading step), and the hydraulic excavator 1 releases the work target object 4 from the lowest possible position so that there is less damage to the haulage machine 2 due to the fall of the work target object 4. On the other hand, as illustrated in (b) in FIG. 11, since the work target object 4 has been put on the haulage machine 2 at the end of the loading work (the last loading step), the hydraulic excavator 1 releases the work target object 4 from a position higher than that at the start of the loading work. Accordingly, PrevHbk, which is the lowest point of the bucket-claw-tip height Hbk during the loading step, varies from the start to the end of the loading work.

When it is determined at Step S137 that PrevHbk is lower than the threshold Th_Hbk, that is, loading work has started, the process proceeds to Step S115, and the loading in-progress flag Flw is set to ON. Thereafter, Step S112 is executed, the hauled weight M is added to the loaded amount Mtotal, and the process proceeds to Step S138. Note that, in order to compensate for the fact that the timing at which the loading in-progress flag Flw is set to ON is delayed, and Step S111 in FIG. 4B at the initial loading step is not implemented due to the processes at Step S135 and Step S136, Step S112 is implemented after Step S115.

On the other hand, when it is determined at Step S137 that PrevHbk is higher than the threshold Th_Hbk, that is, the loading work has ended, the process proceeds to Step S117, and the loading in-progress flag Flw is set to OFF. Subsequently, at Step S118, the loaded amount Mtotal is transmitted. At Step S119, the loaded amount Mtotal is reset to 0, and the process proceeds to Step S138.

At Step S138, the controller 21 sets the instruction retention flag TempFhorn to OFF, and resets PrevHbk to the initial value (= 0), and the process returns to Step S100.

<Second Embodiment>

While, in the first embodiment, the work instruction (horn 41) to stop a haulage machine 2 is output at a haulage step, and the work command for a departure of the haulage machine 2 is output at a loading step, some operators of the hydraulic excavator 1 output the work instruction to stop a haulage machine 2 at a loading step subsequent to a haulage step, and output the work command for a departure of the haulage machine 2 at the haulage step before the loading step, in some cases. In such a case also, loaded amounts need to be calculated accurately.

(1) In view of this, the controller 21 according to the present embodiment determines that a haulage step at a first loading cycle is the initial loading step when a work instruction is sensed at the haulage step at the first loading cycle and the loaded amount Mtotal until a second loading cycle which is the previous cycle of the first loading cycle is smaller than a loading threshold Th_Mtotal, or when a work instruction is sensed at the haulage step at the first loading cycle and elapsed time tcry from the start of the haulage step at the first loading cycle until the time of the sensing of the work instruction is longer than a first time threshold Th_tcry (a route from Step S142 to Step S149 in FIG. 12 mentioned below).

(2) In addition, the controller 21 according to the present embodiment integrates the hauled weight M calculated at a haulage step at a first loading cycle with the loaded amount Mtotal until a second loading cycle which is the previous cycle of the first loading cycle at a loading step at the first loading cycle, and calculates the loaded amount Mtotal of a haulage machine in a case in which: a work instruction is sensed at the haulage step at the first loading cycle, and the loaded amount Mtotal until the second loading cycle is equal to or larger than the loading threshold Th_Mtotal; and a work instruction is sensed at the haulage step at the first loading cycle, and the elapsed time tcry from the start of the haulage step at the first loading cycle until the time of the sensing of the work instruction is equal to or shorter than the first time threshold Th_tcry (a route from Step S142 to Steps S143 and S144 in FIG. 12 mentioned below).

(3) In addition, the controller 21 according to the present embodiment determines that a loading step at a third loading cycle is the last loading step when a work instruction is sensed at the loading step at the third loading cycle and the hauled weight M calculated at a haulage step at the third loading cycle is larger than a weight threshold Th_M, or when a work instruction is sensed at the loading step at the third loading cycle and elapsed time tload from the start of a loading step at a fourth loading cycle which is the previous cycle of the third loading cycle until the start of the loading step at the third loading cycle is shorter than a second time threshold Th_tload (a route from Step S147 to Step S150 in FIG. 12 mentioned below). It should be noted however that the loading threshold Th_Mtotal is larger than the weight threshold Th_M, and the first time threshold Th_tcry is shorter than the second time threshold Th_tload.

(4) In addition, the controller 21 according to the present embodiment integrates the hauled weight M calculated at a haulage step at a third loading cycle with the loaded amount Mtotal until a fourth loading cycle which is the previous cycle of the third loading cycle, and calculates the loaded amount Mtotal of a haulage machine 2 when a work instruction is sensed at a loading step at the third loading cycle and the hauled weight M calculated at the haulage step at the third loading cycle is equal to or smaller than the weight threshold Th_M, or when a work instruction is sensed at the loading step at the third loading cycle and the elapsed time Tload from the start of a loading step at the fourth loading cycle until the start of the loading step at the third loading cycle is equal to or longer than the second time threshold Th_tload (a route from Step S147 to Steps S148 and S149 in FIG. 12 mentioned below).

In the following, details of the configuration of the controller 21 for realizing the control in (1) to (4) described above are explained.

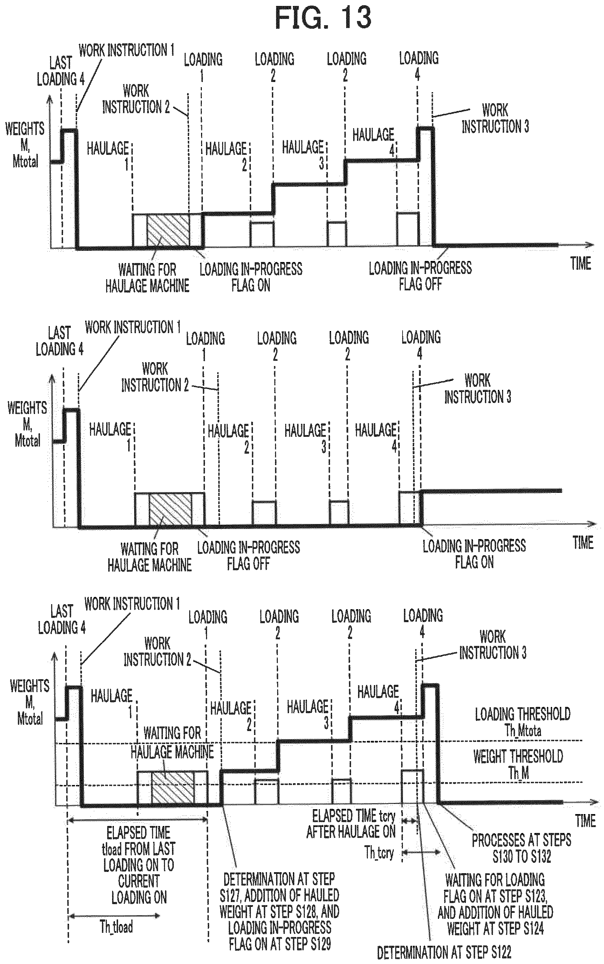

FIG. 12 is a flowchart illustrating a method performed by the controller 21 to determine a start and end of loading work by using an implementation time and a loaded amount at each step in the loading work. FIG. 13 includes graphs illustrating calculation results of a hauled weight, a loaded amount, the haulage flag Fcry, and the loading flag Fload calculated during loading work by the hydraulic excavator 1. Note that the horizontal axes of the graphs in FIG. 13 represent time, and the vertical axes represent the magnitudes of the weight M and the loaded amount Mtotal. The hauled weight M is represented by thin lines, and the loaded amount Mtotal is represented by bold lines. In addition, vertical broken lines in the graphs represent times at which the loading flag Fload and the haulage flag Fcry are set to ON. Note that the top section in FIG. 13 illustrates the transition of the hauled weight M and the loaded amount Mtotal in one instance of loading work in the embodiment described above, the middle section in FIG. 13 illustrates a state where a loading step (loading 1) is implemented earlier than a work instruction (a work instruction 2) at the start of loading work, furthermore a work instruction (a work instruction 3) is implemented earlier than a loading step (loading 4) at the end of the loading work, and, as a result, the loaded amount Mtotal is insufficient, and the bottom section in FIG. 13 illustrates a state where the deficiency of the loaded amount Mtotal that occurs in the middle section in FIG. 13 is corrected according to the present embodiment. By using FIG. 12 and FIG. 13, the method of determining a start and end of loading work is explained.

The flowchart in FIG. 12 replaces Step S114 to Step S119 in FIG. 4B. Note that it is assumed that the controller 21 records a time at which a process about each flag is implemented at Step S103 and Step S109, and retains the time on the memory.

When, at Step S113 in FIG. 4B, there is a work instruction to a haulage machine 2, at Step S140, the controller 21 (loading period determining section 54) determines whether or not the haulage flag Fcry is ON. When the haulage flag Fcry is ON, the process proceeds to Step S141, and otherwise the process proceeds to Step S145.

At Step S141, the controller 21 determines whether or not the bucket absolute angle $\theta$ab is larger than the threshold Th_$\theta$ab recorded in advance on the memory. When the bucket absolute angle $\theta$ab relative to the horizontal plane is larger than the threshold Th_$\theta$ab, the process proceeds to Step S142, and otherwise the process proceeds to Step S154.

Meanwhile, at Step S140 and Step S141, similarly to Step S114 in FIG. 4B, it is determined whether or not the loading work has started, on the basis of the state at the time when a work instruction is output and the posture of the bucket 15. As represented by the work instruction 2 in the top section in FIG. 13, at the start of loading work, the hydraulic excavator 1 is waiting for an entrance of the haulage machine 2 during an excavation step, and starts a loading step after outputting a cue to stop as a work instruction to the haulage machine 2. Accordingly, the controller 21 (loading period determining section 54) determines that the haulage 1 is in progress, and determines that loading work has started because the work instruction 2 is input in a state in which the haulage flag Fcry is ON, and the bucket absolute angle $\theta$ab relative to the horizontal plane is larger than the threshold Th_$\theta$ab.

- Problem 1 -

Meanwhile, at some work sites, at the end of loading work, expecting the time required for an operator of a haulage machine 2 to make the haulage machine 2 depart after the operator notices a work instruction, the work instruction is output before an operator of the hydraulic excavator 1 starts a loading step, that is, during a haulage step, in some cases. In that case, the work instruction 3 is input before it is determined that the loading 4 is in progress, and the loading flag Fload is set to ON as represented by the work instruction 3 in the middle section in FIG. 13. Accordingly, in the process at Step S114 in FIG. 4B, the loading in-progress flag is set to ON, and it is determined mistakenly that loading work has started despite the fact that actually the loading work has ended.

- Solution 1 -

In view of this, at Step S142, the controller 21 (loading period determining section 54) in the present embodiment determines whether or not the loaded amount Mtotal is smaller than the threshold Th_Mtotal recorded in advance on the memory in the controller 21, or the time tcry that has elapsed since the haulage flag Fcry has been set to ON is longer than the threshold Th_tcry recorded in advance on the memory. As represented by the work instruction 3 in the bottom section in FIG. 13, when the loaded amount Mtotal is larger than a threshold Th_Mtotla, and the time tcry that has elapsed since it is determined the haulage 4 is in progress, and the haulage flag Fcry has been set to ON until the work instruction 3 is output is shorter than the threshold Th_tcry, it is determined that a work instruction has been given before a loading step is implemented at the end of loading work.

If, the condition of Step S142 is not satisfied, that is, when it is determined that a work instruction has been given before a loading step is implemented at the end of loading work, the controller 21 (loading period determining section 54) waits until the loading flag Fload is set to ON at Step S143, without performing other processes. That is, the determination at Step S108 in FIG. 4A is implemented repeatedly at Step S143, and unless the determination condition is satisfied, the determination at Step S108 is executed repeatedly. If the determination condition is satisfied, the loading flag Fload is set to ON, and the process proceeds to Step S144. At Step S144, the loaded amount calculating section 51 integrates the hauled weight value M with the loaded amount Mtotal, and proceeds to Step S151.

If the condition is satisfied at Step S142, the controller 21 (loading period determining section 54) determines that loading work has started, proceeds to Step S149, and sets the loading in-progress flag to ON similarly to the process at Step S115 in FIG. 4B, and the process returns to Step S100.

When the haulage flag Fcry is OFF at Step S140, the controller 21 (loading period determining section 54) proceeds to Step S145, and, at Step S145, determines whether or not the loading flag Fload is ON. When the loading flag Fload is ON, the process proceeds to Step S146, and otherwise the process proceeds to Step S144.

At Step S146, the controller 21 (loading period determining section 54) determines whether or not the bucket absolute angle $\theta ab$ relative to the horizontal plane is smaller than the threshold Th_$\theta ab$ recorded in advance on the memory. When the bucket absolute angle $\theta ab$ relative to the horizontal plane is smaller than the threshold Th_$\theta ab$, the process proceeds to Step S147, and otherwise the process proceeds to Step S154.

At Step S145 and Step S146, similarly to Step S116 in FIG. 4B, it is determined whether or not the loading work has ended, on the basis of the state at the time when a work instruction is output and the posture of the bucket 15. As represented by the work instruction 3 in the top section in FIG. 13, at the end of loading work, a cue to depart is output as a work instruction to the haulage machine 2 after the hydraulic excavator 1 has started a loading step, and the loading work is completed. Accordingly, the loading period determining section 54 determines that the loading 4 is in progress, and determines that the loading work has ended because the work instruction 3 is input in a state in which the loading flag Fload representing that a loading step is in progress is ON and the bucket absolute angle $\theta ab$ relative to the horizontal plane is smaller than the threshold Th_$\theta ab$.

- Problem 2 -

Meanwhile, at some work sites, at the start of loading work, in order to reduce the time during which the hydraulic excavator 1 is waiting for a haulage machine 2 as much as possible, loading work is started while the haulage machine 2 is moving, that is, a work instruction is output during a loading step, in some cases. In that case, the work instruction 2 is input after it is determined that the loading 1 is in progress, and the loading flag Fload is set to ON as represented by the work instruction 2 in the middle section in FIG. 13. Accordingly, in the process at Step S115 in FIG. 4B, the loading in-progress flag Flw is set to OFF, and it is determined mistakenly that loading work has ended despite the fact that actually the loading work has started.

- Solution 2 -

In view of this, at Step S147, the controller 21 (loading period determining section 54) in the present embodiment determines whether or not the loaded amount Mtotal is larger than the threshold Th_M recorded in advance on the memory, or the time tload that has elapsed since the loading flag Fload has been set to ON last time until the loading flag Fload is set to ON this time is shorter than the threshold Th_tload recorded in advance on the memory. As represented by the work instruction 2 in the bottom section in FIG. 13, it is determined that a work instruction has been given after a loading step is started at the beginning of loading work when the loaded amount Mtotal is smaller than the threshold Th_M, and the time tload that has elapsed since it is determined that the last loading 4 is in progress, and the loading flag Fload has been set to ON until it is determined that the loading 1 is in progress, and the loading flag Fload is set to ON again is long.

If the condition of Step S147 is not satisfied, that is, when it is determined that a work instruction has been given after a loading step has started at the beginning of loading work, the controller 21 (loading period determining section 54) proceeds to Step S148. At Step S148, the controller 21 (loaded amount calculating section 51) adds the hauled weight value M to the loaded amount Mtotal, and proceeds to Step S149.

If the condition is satisfied at Step S147, the controller 21 (loading period determining section 54) determines that the loading work has ended, proceeds to Step S150, sets the loading in-progress flag Flw to OFF similarly to the process in FIG. 4B, and thereafter outputs an instruction to transmit the loaded amount Mtotal via the output information generating section 52 and the external communication device 42 at Step S151. After Step S151, at Step S152, an instruction to reset the loaded amount Mtotal is output to the loaded amount calculating section 51, and the process returns to Step S100.

When the process has proceeded to Step S153, a warning and a screen for confirming whether the loading in-progress flag should be set to ON or OFF are output to the monitor 23. By determining that a work instruction has been output at a timing other than the start or end of loading work in the determinations at Step S140 to Step S142, and Step S145 to Step S147, and leaving the decision to an operator of the hydraulic excavator 1, it is possible to prevent a loaded amount from being calculated mistakenly due to a false determination.

Note that the threshold Th_tload, which is a time-related threshold, is set to any value by which whether or not a haulage machine 2 is being waited for can be determined, within a range equal to or longer than average time required for one excavation step, excavation step or loading step or one instance of reaching work performed by the hydraulic excavator 1. The threshold Th_tcry is set to any value by which whether or not a haulage machine 2 is being waited for can be determined, within a range equal to or longer than average time of an excavation step performed by the hydraulic excavator 1. In addition, the haulage threshold Th_M, which is a hauled-weight-related threshold, is set to any value by which it can be determined that loading work has started, within a range equal to or smaller than an average loaded amount (hauled weight) of a load on a haulage machine 2 loaded by the hydraulic excavator 1 at one loading step. The loading threshold Th_Mtotal is set to any value by which it can be determined that loading work has ended, within a range equal to or larger than an average loaded amount of a load of a haulage machine 2 loaded by the hydraulic excavator 1 at one loading step, and equal to or smaller than an average loaded amount of a load on the haulage machine 2 loaded by the hydraulic excavator 1 in one instance of loading work. By making determinations based on the start time of each type of work in loading work in this way, it is possible to easily make determinations about a start and end of loading work, and accurately calculate the loaded amount even at a site where the timing of output of a work instruction is early or late.

In the manner mentioned above, determinations about a start and end of loading work do not have to be made on the basis of only the absolute angle θbk of the bucket 15 relative to the horizontal plane, and may be made by using other conditions such as the posture and operation state of the hydraulic excavator 1, or the start time of each type of work, or by combining conditions, in other possible configurations.

<Third Embodiment>

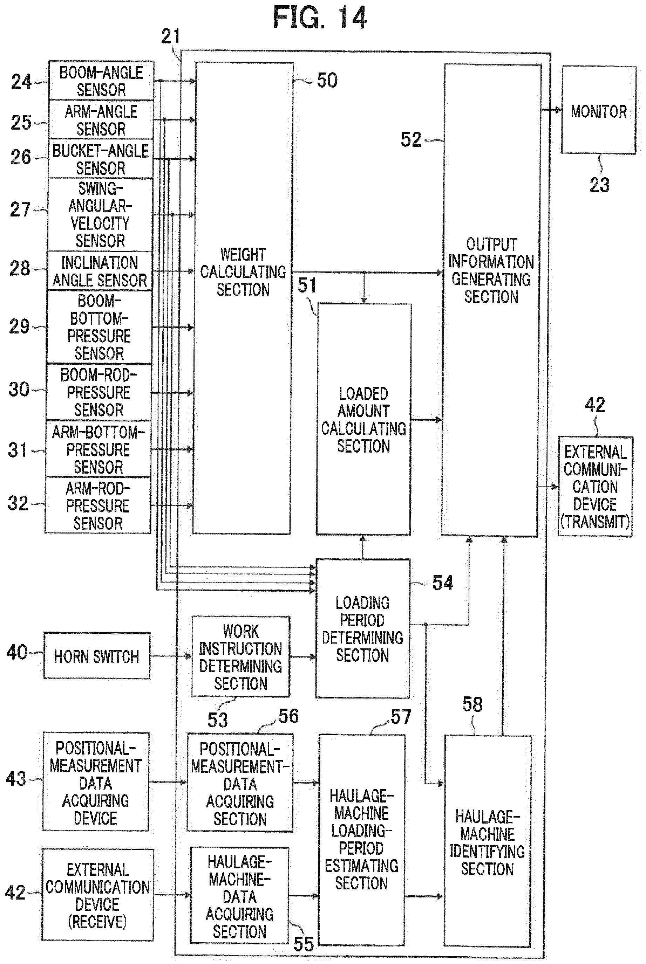

In a procedure explained in the present embodiment by using FIG. 14 to FIG. 17, in a case in which there are a plurality of haulage machines 2 around the hydraulic excavator 1, it is determined which haulage machine 2 in the plurality of haulage machines 2 a loaded amount Mtotal being calculated by the controller 21 is about.

The controller 21 according to the present embodiment receives identification data and positional data about the plurality of haulage machines 2 output from the plurality of haulage machines 2, chooses one haulage machine from the plurality of haulage machines that has been in a predetermined area around the work machine for the longest time from the initial loading step until the last loading step in a certain instance of loading work, on the basis of the received identification data and positional data about the plurality of haulage machines, and outputs, to an external terminal, the loaded amount calculated about the certain instance of loading work as the loaded amount of the chosen haulage machine. In the following, details of the configuration of the controller 21 for realizing the control are explained. Note that it is assumed that a calculation of the loaded amount Mtotal is performed similarly to that in the first embodiment (including the modification examples) or the second embodiment, and an explanation thereof is omitted here.

FIG. 14 is a schematic diagram illustrating the system configuration of according to the present embodiment. The controller 21 illustrated in this figure includes a positional-measurement-data acquiring section 56, a haulage-machine-data acquiring section 55, a haulage-machine loading-period estimating section 57, and a haulage-machine identifying section 58, in addition to the configuration according to the first embodiment. The haulage-machine-data acquiring section 55 acquires identification data IDtuck, and positional data Ptruck about a plurality of haulage machines 2 from the external communication device 42. The positional-measurement-data acquiring section (receiver) 56 calculates a position Pshovel of the hydraulic excavator 1 in a geographic coordinate system, on the basis of a satellite signal received at the antenna (positional-measurement data acquiring device) 43. On the basis of the positional data about a haulage machine 2 acquired by the haulage-machine-data acquiring section 55 and the positional data about the hydraulic excavator 1 calculated by the positional-measurement-data acquiring section 56, the haulage-machine loading-period estimating section 57 calculates a relative distance Lt between the haulage machine 2 and the hydraulic excavator 1, and estimates a loading period of the haulage machine by using the relative distances Lt. The haulage-machine identifying section 58 identifies a haulage machine 2 onto which the work target object 4 is loaded by the hydraulic excavator 1 by comparing the loading period of the hydraulic excavator 1 determined by the loading period determining section 54 with loading periods of haulage machines estimated by the haulage-machine loading-period estimating section 57. The output information generating section 52 according to the present embodiment is configured to simultaneously output identification data IDtruck and a loaded amount Mtotal of the haulage machine determined by the haulage-machine identifying section 58.

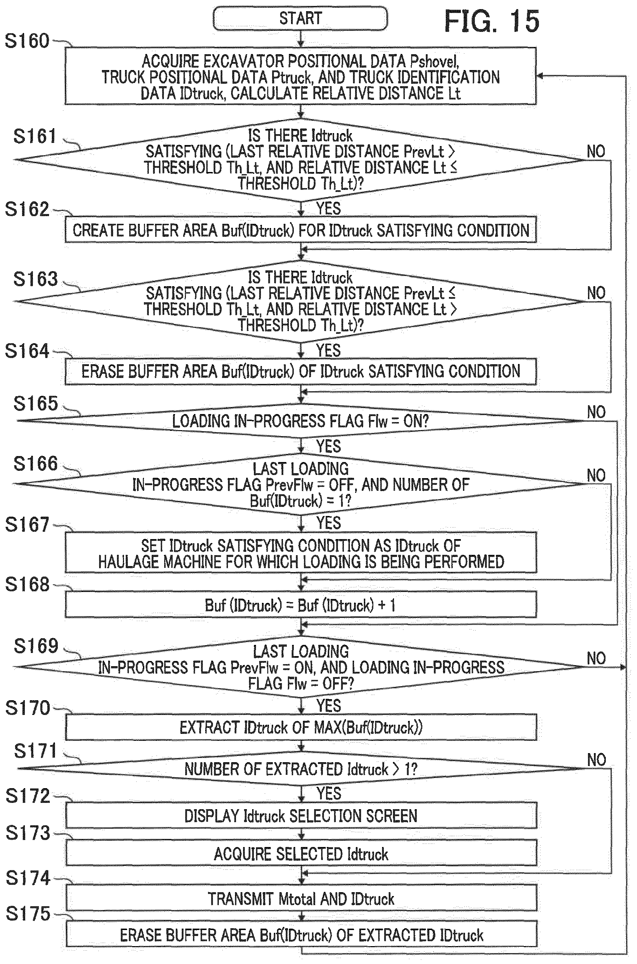

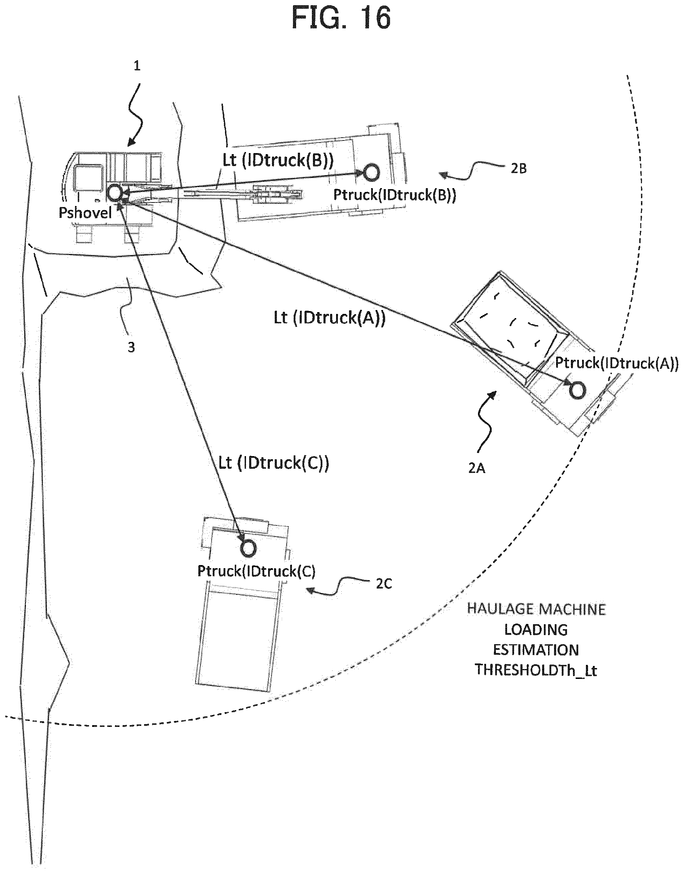

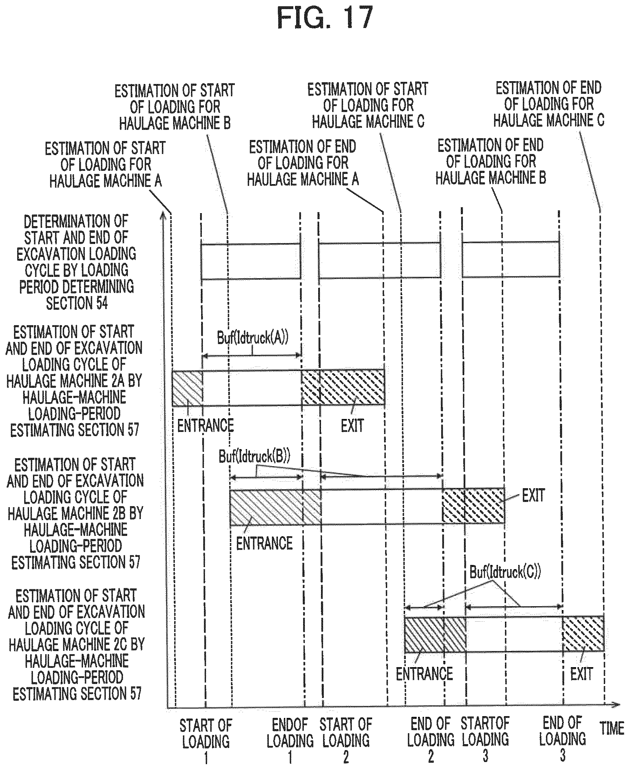

FIG. 15 is a flowchart illustrating a method in processes of programs executed inside the controller 21 to identify a haulage machine onto which the hydraulic excavator 1 has loaded the work target object by using a determination about loading work, and loading periods estimated on a basis of positional data about haulage machines 2. FIG. 16 is a top view illustrating positional relations between the hydraulic excavator 1 and haulage machines 2A to 2C during loading work, illustrating a model to be used for estimations of loading periods of the haulage machines 2A to 2C at the haulage-machine loading-period estimating section 57. FIG. 17 is a graph illustrating a loading period of the hydraulic excavator 1 determined by the loading period determining section 54, and loading periods of haulage machines estimated by the haulage-machine loading-period estimating section 57. Note that the horizontal axis in the graph in FIG. 17 represents time, and areas surrounded by squares represent determined or estimated loading periods. Portions that are illustrated as entrances or exits in FIG. 17 do not represent estimation results, but represent the classification of operation of the haulage machine for explanation. In addition, the top section in the graph represents a period determined by the loading period determining section 54, the second top section represents a period of the haulage machine 2A estimated by the haulage-machine loading-period estimating section 57, the third top section represents a period of the haulage machine 2B estimated by the haulage-machine loading-period estimating section 57, and the bottom section represents a period of the haulage machine 2C estimated by the haulage-machine loading-period estimating section 57.

Each step in FIG. 15 is executed at predetermined sampling intervals at the controller 21. At Step S160, the controller 21 (haulage-machine loading-period estimating section 57) acquires identification data IDtuck and positional data Ptruck(IDtuck) about the plurality of haulage machines 2 from the haulage-machine-data acquiring section 55, and the position Pshovel of the hydraulic excavator 1 from the positional-measurement-data acquiring section 56, and calculates relative distances Lt(IDtruck) between the hydraulic excavator 1 and the haulage machines 2. Note that the positional data Ptruck(IDtuck) about each haulage machine 2 has been calculated at a GNSS receiver mounted on the haulage machine 2, the identification data IDtuck about each haulage machines 2 has been stored on a memory in a controller mounted on the haulage machine 2, for example, and the hydraulic excavator 1 (controller 21) uses the data by receiving it from the haulage machines 2.

Subsequently, at Step S161, it is determined whether or not there is a haulage machine 2 whose relative distance PrevLt in the previous sampling instance is longer than a threshold Th_Lt set in advance on the memory, and whose current relative distance Lt is shorter than the threshold Th_Lt. Here, as illustrated in FIG. 16, the threshold Th_Lt is the radius of a circle centered on the current position Pshovel of the hydraulic excavator 1, and, in the present embodiment, a haulage machine 2 to be associated with a loaded amount Mtotal is selected from haulage machines 2 that are inside the circle. When there is a haulage machine 2 that satisfies the condition of Step S161 described above, at Step S162, the controller 21 (haulage-machine identifying section 58) reserves, on the memory, a buffer Buf(IDtruck) which is a storage area (buffer area) for storing a period in which the haulage machine IDtruck that satisfies the condition is positioned in the circle area having the radius of the threshold Th_Lt about the distance from the hydraulic excavator 1. When there are no haulage machines 2 that satisfy the condition at Step S161, the process proceeds to Step S163 with no other processes being performed.

At Step S163, the controller 21 (haulage-machine loading-period estimating section 57) determines whether or not there is a haulage machine 2 whose relative distance Lt in the previous sampling instance is equal to or shorter than the threshold Th_Lt set in advance on the memory, and whose current relative distance Lt is longer than the threshold Th_Lt. When there is a haulage machine 2 that satisfies the condition, at Step S164, the haulage-machine identifying section 58 erases a buffer Buf(IDtruck) of the haulage machine IDtruck that satisfies the condition on the memory. Thereby, only a buffer Buf(IDtruck) of a haulage machine 2 whose relative distance Lt is equal to or shorter than the threshold Th_Lt always exists on the memory. When there are no haulage machines 2 that satisfy the condition at Step S163, the process proceeds to Step S165 with no other processes being performed.

The controller 21 (haulage-machine-data acquiring section 55) has acquired the positional data Ptruck(IDtuck) about the plurality of haulage machines 2A to 2C as illustrated in FIG. 16, and the controller 21 (haulage-machine loading-period estimating section 57) estimates that a haulage machine 2 that is positioned inside the circle having the radius equal to the threshold Th_Lt recorded in advance on the memory is a haulage machine for which loading is performed.

Accordingly, even if loading work is not being performed for the haulage machines 2A to 2C actually, it may be estimated that the haulage machines 2A to 2C are in loading periods if they approach the hydraulic excavator 1. For example, as illustrated in FIG. 17, although loading work for the haulage machine 2A ends, and the haulage machine 2A starts exiting the work site at the time when the loading period determining section 54 determines that there is an end of loading 1, it takes time for the haulage machine 2A to move out of the area of the threshold Th_Lt. Accordingly, if a loading period is estimated, on the basis of only relative positions of the hydraulic excavator 1 and the haulage machines 2, by the haulage-machine loading-period estimating section 57 at Step S161 and Step S163, it is estimated that there is the end of loading of the haulage machine A in a period from a start of loading 2 to an end of loading 2 determined by the loading period determining section 54, that is, during loading work for the haulage machine 2B. In addition, although loading work for the haulage machine 2C is started at the time when it is determined that there is a start of loading 3, the haulage machine 2C has entered the area of the haulage-machine-loading estimation threshold before the loading work is started. Accordingly, if a loading period is estimated, on the basis of only relative positions of the hydraulic excavator 1 and the haulage machines 2, by the haulage-machine loading-period estimating section 57 at Step S161 and Step S163, it is estimated that there is the start of loading of the haulage machine C in a period from the start of loading 2 to the end of loading 2 determined by the loading period determining section 54, that is, during the loading work for the haulage machine 2B. In this manner, if a loading period is estimated, on the basis of only relative positions PreveLt and Lt of the hydraulic excavator 1 and a haulage machine 2, by the haulage-machine loading-period estimating section 57 at Step S161 and Step S163, start and end times of loading work cannot be calculated precisely, and an overlap of estimated periods may occur. In view of this, the controller 21 according to the present embodiment performs the following process.

At Step S165, the controller 21 (haulage-machine identifying section 58) determines whether or not the loading in-progress flag Flw is ON. When the loading in-progress flag Flw is ON, the process proceeds to Step S166, and otherwise the process skips to Step S169. At Step S166, it is determined whether or not a loading in-progress flag PrevFlw in the previous sampling instance is OFF, and the number of Buf(IDtruck) reserved on the memory is one. That is, in combination with the condition at Step S165, it is determined whether or not the number of Buf(IDtruck) at the moment when the loading in-progress flag has been switched from OFF to ON is one. If the condition is satisfied, at Step S167, a haulage machine 2 having the corresponding IDtruck is set as a haulage machine for which loading is being performed. Since the moment at which the loading period determining section 54 has determined that loading work has started is extracted at Step S166, and it is estimated that the haulage machine 2A is the only haulage machine for which loading is started at the time when the loading is started as represented by a start of loading 1 in FIG. 17, the haulage machine 2A is set as a haulage machine for which loading is being performed. The case that there are a plurality of haulage machines 2 at the timing when loading work is started (the state corresponding to the start of loading 2 and the start of loading 3) is explained in relation to Step S175 mentioned below.

At Step S168, 1 is added to all of Buf(IDtruck) reserved on the memory in the controller 21, and thereafter the process proceeds to Step S169.

At Step S169, it is determined whether or not the loading in-progress flag PrevFlw in the previous sampling instance is ON, and the current loading in-progress flag Flw is OFF. If the condition is satisfied, that is, if the moment when the loading in-progress flag is switched from ON to OFF is sensed, the process proceeds to Step S170, and otherwise the process returns to Step S160.

At Step S170, IDtruck with the largest value is extracted from a plurality of Buf(IDtruck). That is, one haulage machine 2 in the plurality of haulage machines 2 that has stayed for the longest time within the predetermined area (threshold Th_Lt) from the hydraulic excavator 1 during a period from the initial loading step to the last loading step in loading work for a certain haulage machine 2 is chosen. At the end of loading 1 in FIG. 17, there are two, Buf(IDtruck(A)) and Buf(IDtruck(B)), but Buf(IDtruck(A)) has a longer period of addition (i.e. has the largest Buf(IDtruck)), and it can be identified that loading is performed for the haulage machine 2A in the period from the start of loading 1 to the end of loading 1. Similarly, at the end of loading 2 in FIG. 17, there are two, Buf(IDtruck(B)) and Buf(IDtruck(C)), but Buf(IDtruck(B)) has a longer period of addition, and it can be identified that loading is performed for the haulage machine 2B in the period from the start of loading 2 to the end of loading 2.

At Step S171, it is determined whether or not the number of extracted IDtruck is larger than 1. If the condition is satisfied, the process proceeds to Step S172, and otherwise the process skips to Step S174.

At Step S172, it is determined that a plurality of haulage machines 2 happened to be identified. Accordingly, a screen for displaying identification data IDtruck about corresponding haulage machines 2, and for selecting a haulage machine 2 as a loaded amount calculation target is displayed on the monitor 23, and an operator of the hydraulic excavator 1 is prompted to select a haulage machine 2 for which loading has been performed. At the subsequent Step S173, identification data IDtruck selected by the operator of the hydraulic excavator 1 is acquired, and the process proceeds to Step S174.

At Step S174, it is instructed to transmit the extracted IDtruck and a loaded amount Mtotal via the output information generating section 52 and the external communication device 42, and the process proceeds to Step S175.

At Step S175, a buffer area Buf(IDtruck) on the memory corresponding to the extracted IDtruck is erased. At the end of loading 1 in FIG. 17, there are two, Buf(IDtruck(A)) and Buf(IDtruck(B)), but because Buf(IDtruck(A)) is extracted at Step S170, Buf(IDtruck(A)) is erased at Step S175. Here, the only buffer area Buf(IDtruck) on the memory at the start of loading 2 is Buf(IDtruck(B)). That is, in the processes at Step S166 and Step S167 at the start of loading 2, the haulage machine 2B corresponding to IDtruck(B) is set as a haulage machine for which loading is being performed. Similar processes are performed for the end of loading 2, and the start of loading 3 in FIG. 17. When the process at Step S175 ends, the process returns to Step S160, and the series of processing is executed again.

By comparing a loading period determined by the work machine (hydraulic excavator) 1 with loading periods estimated on a basis of data about haulage machines 2 in this way, a haulage machine 2 for which loading has been performed can be identified precisely, and a loaded amount and the haulage machine 2 for which loading has been performed can be associated with each other. Accordingly, a loaded amount of each haulage machine 2 can be managed precisely.

Note that the method of identifying a haulage machine 2 is not limited to the method mentioned above, but may be a different identification method. For example, obviously the method performed by the haulage-machine loading-period estimating section 57 to estimate loading periods needs not be based on only positional-measurement data about the hydraulic excavator 1 and haulage machines 2. For example, RF tags may be attached to haulage machines 2, the hydraulic excavator 1 may include an RF reader, and it may be detected that a haulage machine 2 is approaching by using an RG tag and the RG reader, in another possible configuration. A gate-type identifying machine may be provided at the entrance/exit of a work site, and data about the times of entrances/exits of haulage machines acquired at the gate may be able to be acquired by the hydraulic excavator 1 via a network, in still another possible configuration.

<Fourth Embodiment>

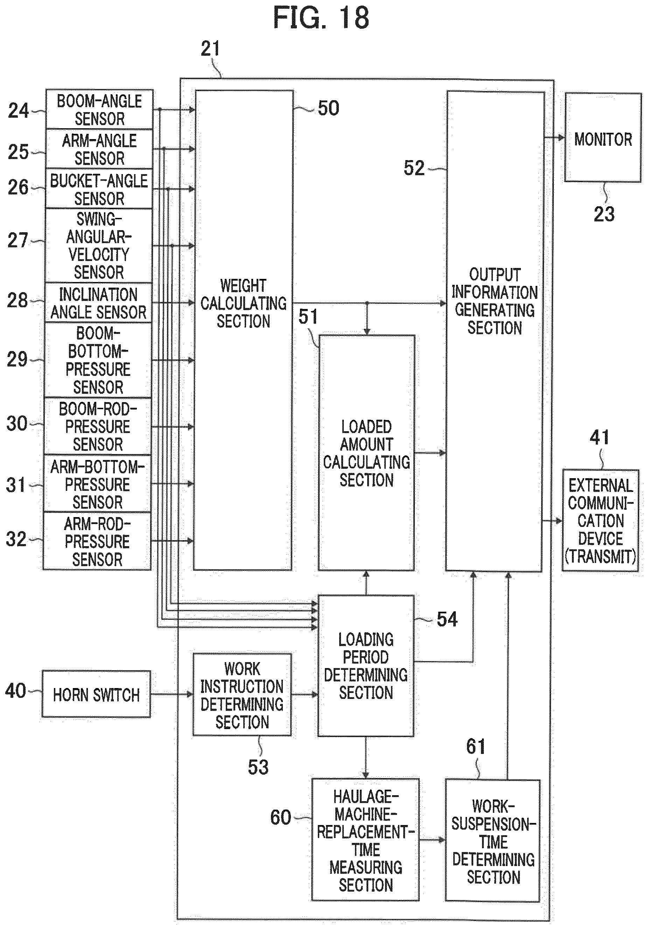

In a method explained in the present embodiment by using FIG. 18 to FIG. 20, time (haulage-machine replacement time) required for the hydraulic excavator 1 (work machine) from the end of loading work for one haulage machine 2 until the start of loading work for the next haulage machine 2 is measured, and, when the time includes a long period (work-suspension time) during which the hydraulic excavator 1 is not performing work, a warning is output to an operator of the hydraulic excavator 1 via the monitor 23 or the like.

The controller 21 according to the present embodiment measures required time from the last loading step for a certain haulage machine 2 until the initial loading step for another haulage machine which is the loading target next to the certain haulage machine, and, when the required time exceeds a prestored set value, it is determined that the work efficiency of the hydraulic excavator 1 has deteriorated, and a result of the determination is output to an external terminal. In the following, details of the configuration of the controller 21, and a system including the controller 21 for realizing the control are explained. Note that it is assumed that a calculation of the loaded amount Mtotal is performed similarly to that in the first embodiment, and an explanation thereof is omitted. It is needless to say that the control can be applied also to the modification examples of the first embodiment, and the second embodiment.

FIG. 18 is a schematic diagram illustrating the system configuration according to the present embodiment. The controller 21 illustrated in this figure includes a haulage-machine-replacement-time measuring section 60, and a work-suspension-time determining section 61, in addition to the configuration according to the first embodiment. On the basis of determinations about a start and end of loading work determined by the loading period determining section 54, the haulage-machine-replacement-time measuring section 60 measures haulage-machine replacement time required for replacement with the next haulage machine 2 after the end of loading work for one haulage machine 2, and loading-work time required for completion of the loading work for the one haulage machine 2. The work-suspension-time determining section 61 instructs the output information generating section 52 to output a warning when any of the work-suspension time during which the hydraulic excavator 1 is not performing work, the loading-work time, and overall work time of work performed by the hydraulic excavator 1 is long, on the basis of the haulage-machine replacement time and the loading-work time measured by the haulage-machine-replacement-time measuring section 60.

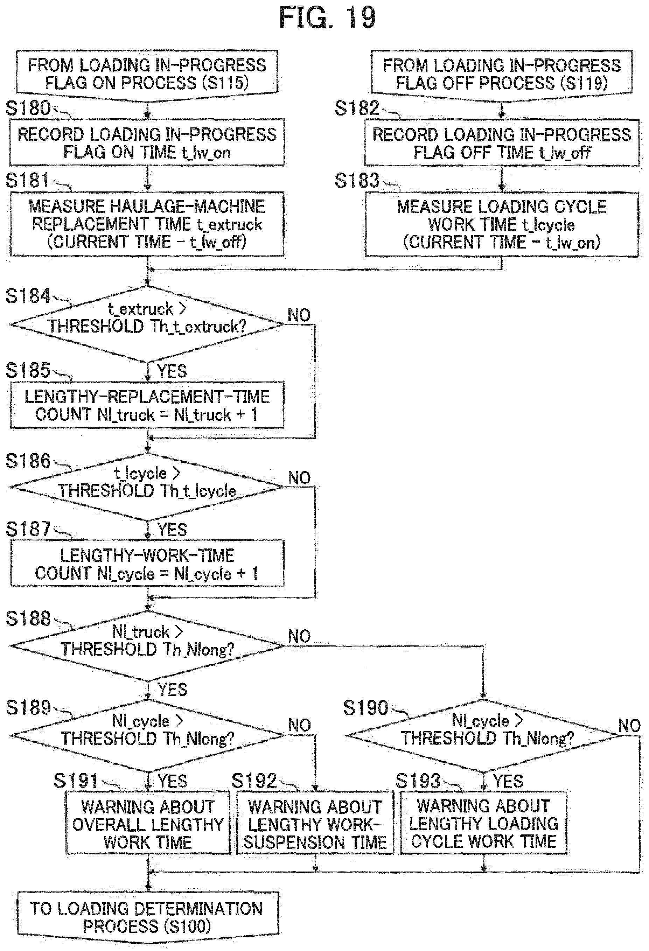

FIG. 19 is a flowchart illustrating a method performed by the haulage-machine-replacement-time measuring section 60 and the work-suspension-time determining section 61 to measure the haulage-machine replacement time and the loading-work time, and to give an instruction for a warning related to work time of the hydraulic excavator 1, respectively. Note that the flowchart in FIG. 19 is implemented subsequent to Step S115 or Step S119 in FIG. 4B. In addition, as an indicator of work efficiency, the controller 21 counts occurrences of loading work that took long haulage-machine replacement time and loading-work time, and retains, on the inside memory (storage device), a lengthy-haulage-machine-replacement-time count, and a lengthy-loading-cycle-work-time count.

When it is determined at Step S114 that loading work has started, and the loading in-progress flag Flw is set to ON at Step S115, at Step S180, the controller 21 (haulage-machine-replacement-time measuring section) 60 stores a time t_lw_on at which the loading in-progress flag Flw is set to ON.

When it is determined at Step S116 that loading work has ended, and the loaded amount Mtotal is reset at Step S119, at Step S182, the controller 21 (haulage-machine-replacement-time measuring section 60) stores a time t_lw_off at which the loading in-progress flag Flw is set to OFF.

Subsequently, at Step S181, the difference between the current time and the time t_lw_off stored at Step S182 is calculated as haulage-machine replacement time t_wxtruck. In addition, at Step S183, the difference between the current time and the time t_lw_on stored at Step S180 is calculated as loading-work time t_lcycle, and the process proceeds to Step S184.

At S184, the controller 21 (work-suspension-time determining section 61) determines whether or not a step haulage-machine replacement time t_extruck is longer than a threshold Th_t_extruck recorded in advance on the memory. When the step haulage-machine replacement time t_extruck is longer, at Step S185, the lengthy-haulage-machine-replacement-time count Nl_truck retained on the memory is increased by 1, and the process proceeds to Step S186. When the step haulage-machine replacement time t_extruck is shorter, the process proceeds to Step S186 with no other processes being performed.

At the subsequent Step S186, the controller 21 determines whether or not the loading-work time t_lcycle is longer than a threshold Th_t_lcycle recorded in advance on the memory. When the loading-work time t_lcycle is longer, at Step S187, the lengthy-loading-work-time count Nl_cycle is increased by 1, and the process proceeds to Step S188. When the loading-work time t_lcycle is shorter, the process proceeds to Step S188 with no other processes being performed.

At Step S188, the controller 21 determines whether or not the lengthy-haulage-machine-replacement-time count Nl_truck is larger than a threshold Th_Nlong recorded in advance on the memory. When the lengthy-haulage-machine-replacement-time count Nl_truck is larger, the process proceeds to Step S189, and otherwise the process proceeds to Step S190.

At Step S189, the controller 21 determines whether or not the lengthy-loading-work-time count Nl_cycle is larger than the threshold Th_Nlong recorded in advance on the memory. When at Step S189 the count is larger, the process proceeds to Step S191, and otherwise the process proceeds to Step S192.

At Step S190, the controller 21 determines whether or not the lengthy-loading-work-time count Nl_cycle is larger than the threshold Th_Nlong recorded in advance on the memory. When at Step S190 the count is larger, the process proceeds to Step S193, and otherwise the process returns to Step S100 with no other processes being performed.

At Step S191, the controller 21 outputs a warning that both the replacement time of haulage machines 2 and the work time required for loading work are lengthy to the monitor 23 of the hydraulic excavator 1 and the management monitor 45 (see FIG. 20) connected to a computer installed in the management building 5. At Step S192, the controller 21 outputs, to the monitors 23 and 45, a warning that the time required for replacement of haulage machines 2 is long and the time during which the hydraulic excavator 1 is not performing work is long. At Step S193, the controller 21 outputs, to the monitors 23 and 45, a warning that the work time of loading work for one haulage machine is long.

Note that the threshold Th_t_extruck, which is time-related threshold, is set to any value within a range from the average of time required for an excavation step and an excavation step performed by the hydraulic excavator 1 to time required for one instance of loading work, and the threshold Th_t_lcycle is set to any value within a range equal to or longer than the average of time required for one instance of loading work performed by the hydraulic excavator 1. In addition, the threshold Th_Nlong, which is a threshold of a loading-work count, is set to any value within a range equal to or smaller than the average count of instances of loading work performed by the hydraulic excavator 1 per day.

FIG. 20 is an external view illustrating output screens of the monitor 23 of the hydraulic excavator 1, and the management monitor 45 in the present embodiment. The upper section in FIG. 20 is a figure illustrating one example of the output screen of the monitor 23 at the time when a warning is output to an operator of the hydraulic excavator 1. The lower section in FIG. 20 is a figure illustrating one example of a display content of the management monitor 45 connected to a computer installed in the management building 5.

In FIG. 20, the monitor 23 of the hydraulic excavator 1 displays, in the alert display section 94, a message that the hydraulic excavator 1 is waiting for a truck. In addition, the management monitor 45 displays icons representing the current positions of a plurality of hydraulic excavators 1, and a plurality of haulage machines 2 in a superimposed manner on a map of a work site. In the example illustrated in FIG. 20, a pop-up window 96 is displayed to notify that haulage-machine replacement time of a hydraulic excavator 1 performing loading in a work site B is lengthy, and it is estimated that the hydraulic excavator 1 has to wait for a truck. By simultaneously displaying haulage-machine replacement time (waiting time: 2:45) on the pop-up window 96, it is made possible to grasp the state of the hydraulic excavator 1. When there is waiting time until a haulage period because a haulage machine has not arrived at the loading site B, a manager of the work site can adjust the arrangement of haulage machines 2.

If determinations of loading periods by the loading period determining section 54 is used in the manner mentioned above, time required for loading work for one haulage machine 2 and time required for replacement of haulage machines can be measured, and it becomes possible to precisely grasp time in which the hydraulic excavator 1 is actually performing work in the overall work time, and time in which the hydraulic excavator 1 is waiting for haulage machines 2 in the overall work time. Thereby, it is possible to estimate factors that have led to an increase in work time, and a manager of a work site can manage machines at the work site in more detail.

Note that the present invention is not limited to the embodiments described above, and includes various modification examples within the scope of the appended claims. For example, the present invention is not limited to those including all the configurations explained in the embodiments described above, but also includes those from which some of the configurations are eliminated. In addition, some of configurations related to an embodiment can be added to or be replaced with configurations related to another embodiment.

For example, while the hydraulic excavator 1 used in the explanation of each embodiment described above has the upper swing structure 11, the boom 13, the arm 14, and the bucket 15, the configuration of a work implement is not limited to this, but may be a work implement such as a lifting magnet machine having a different form.

Determinations at steps by the weight calculating section 50 are not limited to those according to the method using the arm-cylinder bottom pressure and the bucket angle as mentioned above. For example, in a case of a work machine like a lifting magnet machine, it is easy to make determinations about a haulage step and a loading step on the basis of an ON/OFF signal about magnetic attraction.

In addition, data input and output through the external communication device 42 is not limited to a loaded amount and positional data about a haulage machine 2, and obviously, for example, a target loading amount of a haulage machine 2 may be output, in other possible configurations.

Calculations of hauled weights are not limited to those according to calculation formulae based on the model illustrated in FIG. 6, but obviously different calculation formulae may be used. For example, weights may be calculated by using an equation of motion of the front work implement 12 including the boom 13, the arm 14, and the bucket 15.

In addition, each configuration related to the controller (controller) 21 described above, and the functionality, execution process, and the like of each configuration may be partially or entirely realized by hardware (e.g. designing logic to execute each functionality in an integrated circuit). In addition, configurations related to the controller 21 described above may be a program (software) that is read out/executed by a calculation processing device (e.g. a CPU) to thereby realize each functionality related to the configurations of the controller 21. Data related to the program can be stored on, for example, a semiconductor memory (a flash memory, an SSD, and the like), a magnetic storage device (a hard disk drive, and the like), and a recording medium (a magnetic disk, an optical disk, and the like).

In addition, although control lines and information lines that are deemed to be necessary for the explanation of each embodiment are illustrated in the explanation of the embodiment described above, all control lines and information lines related to products are not necessarily illustrated. It may be considered that actually almost all configurations are connected mutually.

Description of Reference Characters

1: Hydraulic excavator
2: Haulage machine
11: Swing structure
12: Front work implement
15: Bucket (work device)
21: Controller
23: Monitor
42: External communication device
45: Management monitor
24 to 28: Angle sensor (posture sensor)
29 to 32: Pressure sensor (load sensor)
40: Horn switch (work instruction switch)
41: Horn (notification device)
50: Weight calculating section
51: Loaded amount calculating section
52: Output information generating section
53: Work instruction sensing section
54: Loading period determining section
55: Haulage-machine-data acquiring section
56: Positional-measurement-data acquiring section (receiver)
57: Haulage-machine loading-period estimating section
58: Haulage-machine identifying section
60: Haulage-machine-replacement-time measuring section
61: Work-suspension-time determining section

**Claims**

1. A work machine (1) comprising:

   a machine body;
   a work arm that has, on one end side of the work arm, a work device (15) that performs loading of a work target object (4) onto a haulage machine (2), and is, on another end side of the work arm, attached to the machine body;
   a posture sensor (24, 25, 26, 27, 28) that senses a posture of the work arm including the work device (15);
   a load sensor (29, 30, 31, 32) that senses a load acting on the work arm;
   a notification device (41) for giving notification of a work instruction to the haulage machine (2); and
   a controller (21) that determines, on a basis of the posture and the load, that a haulage step of hauling the work target object (4) onto the haulage machine (2) has been performed by the work arm, measures a weight of the work target object (4) during the haulage step, and determines, on the basis of the posture or the load, that a loading step of performing loading of the work target object (4) onto the haulage machine (2) has been performed by the work arm, **characterized in that**
   the controller (21) is configured to

   sense the work instruction via the notification device (41),
   determine a start of loading work for the haulage machine (2) and an end of the loading work on a basis of an operation state of the work machine (1) at a time of the sensing of the work instruction,
   integrate the weight of the work target object (4) that has been measured from the start of the loading work until the end of the loading work, and calculate a loaded amount of the haulage machine (2), and
   output the loaded amount to an external terminal at the end of the loading work.

2. The work machine (1) according to claim 1, wherein
   the controller (21) is configured to

   determine, as the loading work, a haulage step of hauling the work target object (4) onto the haulage machine (2) by the work arm, and a loading step of loading the work target object (4) onto the haulage machine (2) by the work arm, on a basis of the posture and the load, and
   determine an initial loading step corresponding to the start of the loading work, and a last loading step corresponding to the end of the loading work on a basis of an operation state of the work arm at the time of the sensing of the work instruction.

3. The work machine (1) according to claim 2, wherein

   the machine body has a swing structure (11) that can swing to the left and right, and
   the controller (21) is configured to

   determine that the initial loading step has been performed when the swing structure (11) has stopped at a haulage step at which the work instruction has been sensed, and
   determine that the last loading step has been performed when the swing structure (11) is swinging at a haulage step at a loading cycle at which the work instruction has been sensed.

4. The work machine (1) according to claim 2, wherein

   the work device (15) is a bucket for excavating the work target object (4), and
   the controller (21) is configured to

   determine that the initial loading step has been performed when an angle of an opening section of the bucket relative to a horizontal plane at the time of the sensing of the work instruction is equal to or larger than a predetermined angle threshold, and
   determine that the last loading step has been performed when, after it has been determined that the initial loading step has been performed, the angle of the opening section of the bucket relative to the horizontal plane at the time of the sensing of the work instruction is smaller than the angle threshold.

5. The work machine (1) according to claim 2, wherein

the work device (15) is a bucket for excavating the work target object (4), and
the controller (21) is configured to

determine that the initial loading step has been performed when a lowest point (PrevHbk) of a height (Hbk) of a bucket claw tip at a loading step at which the work instruction has been sensed is lower than a predetermined height threshold, and
determine that the last loading step has been performed when the lowest point (PrevHbk) of the height (Hbk) of the bucket claw tip at a loading step at a loading cycle at which the work instruction has been sensed is higher than the height threshold (TH_Hbk).

6. The work machine (1) according to claim 2, wherein
the controller (21) is configured to

determine that a haulage step at a first loading cycle is the initial loading step when the work instruction is sensed at the haulage step at the first loading cycle and a loaded amount until a second loading cycle which is a previous cycle of the first loading cycle is smaller than a loading threshold, or when the work instruction is sensed at the haulage step at the first loading cycle and elapsed time from a start of the haulage step at the first loading cycle until the time of the sensing of the work instruction is longer than a first time threshold,
integrate a hauled weight calculated at the haulage step at the first loading cycle with a loaded amount until the second loading cycle which is the previous cycle of the first loading cycle at a loading step at the first loading cycle, and calculate the loaded amount of the haulage machine (2) in a case in which: the work instruction is sensed at the haulage step at the first loading cycle, and the loaded amount until the second loading cycle is equal to or larger than the loading threshold; and the work instruction is sensed at the haulage step at the first loading cycle, and the elapsed time from the start of the haulage step at the first loading cycle until the time of the sensing of the work instruction is equal to or shorter than the first time threshold,
determine that a loading step at a third loading cycle is the last loading step when the work instruction is sensed at the loading step at the third loading cycle and a hauled weight calculated at a haulage step at the third loading cycle is larger than a weight threshold, or when the work instruction is sensed at the loading step at the third loading cycle and elapsed time from a start of a loading step at a fourth loading cycle which is a previous cycle of the third loading cycle until a start of the loading step at the third loading cycle is shorter than a second time threshold, and
integrate a hauled weight calculated at the haulage step at the third loading cycle with a loaded amount until the fourth loading cycle which is the previous cycle of the third loading cycle, and calculate the loaded amount of the haulage machine (2) when the work instruction is sensed at the loading step at the third loading cycle and the hauled weight calculated at the haulage step at the third loading cycle is equal to or smaller than the weight threshold, or when the work instruction is sense at the loading step at the third loading cycle and elapsed time from the start of the loading step at the fourth loading cycle until the start of the loading step at the third loading cycle is equal to or longer than the second time threshold.

7. The work machine (1) according to claim 1, wherein
the notification device (41) is a horn that gives a departure instruction and a stop instruction to the haulage machine (2) when triggered by operation of a switch.

**Patentansprüche**

1. Arbeitsmaschine (1), die Folgendes umfasst:

einen Maschinenkörper;
einen Arbeitsarm, der auf einer Endseite des Arbeitsarms eine Arbeitsvorrichtung (15) aufweist, die das Laden eines Arbeitszielobjekts (4) auf eine Transportmaschine (2) durchführt, und an einer anderen Endseite des Arbeitsarms an dem Maschinenkörper befestigt ist;
einen Lagesensor (24, 25, 26, 27, 28), der eine Lage des Arbeitsarms, der die Arbeitsvorrichtung (15) enthält, erfasst;
einen Lastsensor (29, 30, 31, 32), der eine Last erfasst, die auf den Arbeitsarm wirkt;
eine Benachrichtigungsvorrichtung (41) zur Benachrichtigung der Arbeitsmaschine (2) über eine Arbeitsanweisung; und
eine Steuereinrichtung (21), die basierend auf der Lage und der Last bestimmt, dass ein Transportschritt des Transportierens des Arbeitszielobjekts (4) auf die Transportmaschine (2) durch den Arbeitsarm durchgeführt worden ist, ein Gewicht des Arbeitszielobjekts (4) während des Transportschritts misst und basierend auf der Lage oder der Last bestimmt, dass ein Ladeschritt des Durchführens des Ladens des Arbeitszielobjekts (4) auf die Transportmaschine (2) durch den Arbeitsarm durchgeführt worden ist,

**dadurch gekennzeichnet, dass**
die Steuereinrichtung (21) konfiguriert ist,

die Arbeitsanweisung über die Benachrichtigungsvorrichtung (41) zu erfassen,
einen Beginn der Ladearbeit für die Transportmaschine (2) und ein Ende der Ladearbeit basierend auf einem Betriebszustand der Arbeitsmaschine (1) zu einem Zeitpunkt des Erfassens der Arbeitsanweisung zu bestimmen,
das Gewicht des Arbeitszielobjekts (4), das von dem Beginn der Ladearbeit bis zu dem Ende der Ladearbeit gemessen worden ist, zu integrieren und eine geladene Menge der Transportmaschine (2) zu berechnen, und
am Ende der Ladearbeit die geladene Menge an ein externes Endgerät auszugeben.

2. Arbeitsmaschine (1) nach Anspruch 1, wobei die Steuereinrichtung (21) konfiguriert ist,

basierend auf der Lage und der Last einen Transportschritt des Transportierens des Arbeitszielobjekts (4) auf die Transportmaschine (2) durch den Arbeitsarm und einen Ladeschritt des Ladens des Arbeitszielobjekts (4) auf die Transportmaschine (2) durch den Arbeitsarm als die Ladearbeit zu bestimmen, und
einen anfänglichen Ladeschritt entsprechend dem Beginn der Ladearbeit und einen letzten Ladeschritt entsprechend dem Ende der Ladearbeit basierend auf einem Betriebszustand des Arbeitsarms zu dem Zeitpunkt des Erfassens der Arbeitsanweisung zu bestimmen.

3. Arbeitsmaschine (1) nach Anspruch 2, wobei

der Maschinenkörper eine Schwenkstruktur (11) aufweist, die nach links und rechts schwenken kann, und
die Steuereinrichtung (21) konfiguriert ist,

zu bestimmen, dass der anfängliche Ladeschritt durchgeführt worden ist, wenn die Schwenkstruktur (11) bei einem Transportschritt, bei dem die Arbeitsanweisung erfasst worden ist, angehalten hat, und
zu bestimmen, dass der letzte Ladeschritt durchgeführt worden ist, wenn die Schwenkstruktur (11) bei einem Ladeschritt in einem Ladezyklus, bei dem die Arbeitsanweisung erfasst worden ist, schwenkt.

4. Arbeitsmaschine (1) nach Anspruch 2, wobei

die Arbeitsvorrichtung (15) eine Schaufel zum Ausheben des Arbeitszielobjekts ist, und
die Steuereinrichtung (21) konfiguriert ist,

zu bestimmen, dass der anfängliche Ladeschritt durchgeführt worden ist, wenn ein Winkel eines Öffnungsabschnitts der Schaufel relativ zu einer horizontalen Ebene zu dem Zeitpunkt des Erfassens der Arbeitsanweisung größer oder gleich einem vorgegebenen Winkelschwellenwert ist, und
zu bestimmen, dass der letzte Ladeschritt durchgeführt worden ist, wenn nach dem Bestimmen, dass der anfängliche Ladeschritt durchgeführt worden ist, der Winkel des Öffnungsabschnitts der Schaufel relativ zu der horizontalen Ebene zu dem Zeitpunkt des Erfassens der Arbeitsanweisung kleiner ist als der Winkelschwellenwert.

5. Arbeitsmaschine (1) nach Anspruch 2, wobei

die Arbeitsvorrichtung (15) eine Schaufel zum Ausheben des Arbeitszielobjekts ist (4), und
die Steuereinrichtung (21) konfiguriert ist zum

Bestimmen, dass der anfängliche Ladeschritt durchgeführt worden ist, wenn ein tiefster Punkt (PrevHbk) einer Höhe (Hbk) einer Schaufelkrallenspitze bei einem Ladeschritt, bei dem die Arbeitsanweisung erfasst worden ist, niedriger ist, als ein vorgegebener Höhenschwellenwert, und
Bestimmen, dass der letzte Ladeschritt durchgeführt worden ist, wenn der tiefste Punkt (PrevHbk) der Höhe (Hbk) der Schaufelkrallenspitze bei einem Ladeschritt bei einem Ladezyklus, bei dem die Arbeitsanweisung erfasst worden, höher ist als der Höhenschwellenwert (TH_Hbk).

**6.** Arbeitsmaschine (1) nach Anspruch 2, wobei
die Steuereinrichtung (21) konfiguriert ist zum

Bestimmen, dass ein Transportschritt bei einem ersten Ladezyklus der anfängliche Ladeschritt ist, wenn die Arbeitsanweisung bei dem Transportschritt im ersten Ladezyklus erfasst worden ist, und eine geladene Menge bis zu einem zweiten Ladezyklus, der ein vorheriger Zyklus des ersten Ladezyklus ist, kleiner ist als ein Ladeschwellenwert, oder wenn die Arbeitsanweisung bei dem Transportschritt bei dem ersten Ladezyklus erfasst worden ist und die verstrichene Zeit von einem Beginn des Transportschritts in dem ersten Ladezyklus bis zum Zeitpunkt des Erfassens der Arbeitsanweisung länger ist als ein erster Zeitschwellenwert,
Integrieren eines transportierten Gewichts, das bei dem Transportschritt in dem ersten Ladezyklus berechnet worden ist, mit einer geladenen Menge bis zu dem zweiten Ladezyklus, der der vorherige Zyklus des ersten Ladezyklus bei einem Ladeschritt in dem ersten Ladezyklus ist, und Berechnen der geladenen Menge der Transportmaschine (2), falls: die Arbeitsanweisung bei dem Transportschritt in dem ersten Ladezyklus erfasst worden ist und die geladene Menge bis zum zweiten Ladezyklus größer oder gleich dem Ladeschwellenwert ist; und die Arbeitsanweisung bei dem Transportschritt in dem ersten Ladezyklus erfasst worden ist und die verstrichene Zeit von dem Beginn des Transportschritts in dem ersten Ladezyklus bis zum Zeitpunkt des Erfassens der Arbeitsanweisung kleiner oder gleich dem ersten Zeitschwellenwert ist,
Bestimmen, dass ein Ladeschritt in einem dritten Ladezyklus der letzte Ladeschritt ist, wenn die Arbeitsanweisung bei dem Ladeschritt in dem dritten Ladezyklus erfasst worden ist und ein transportiertes Gewicht, das bei einem Transportschritt in dem dritten Ladezyklus berechnet worden ist, größer ist als ein Gewichtsschwellenwert, oder wenn die Arbeitsanweisung bei dem Ladeschritt in dem dritten Ladezyklus erfasst worden ist und die verstrichene Zeit von einem Beginn eines Ladeschritts in einem vierten Ladezyklus, der ein vorheriger Zyklus des dritten Ladezyklus ist, bis zu einem Beginn des Ladeschritts in dem dritten Ladezyklus kürzer ist als eine zweiter Zeitschwellenwert, und
Integrieren eines transportierten Gewichts, das in dem Transportschritt in dem dritten Ladezyklus berechnet worden ist, mit einer geladenen Menge bis zu dem vierten Ladezyklus, der ein vorheriger Zyklus des dritten Ladezyklus ist, und Berechnen der geladenen Menge der Transportmaschine (2), wenn die Arbeitsanweisung bei dem Ladeschritt in dem dritten Ladezyklus erfasst worden ist und das transportierte Gewicht, das bei dem Transportschritt in dem dritten Ladezyklus berechnet worden ist, kleiner oder gleich dem Gewichtsschwellenwert ist, oder wenn die Arbeitsanweisung bei dem Ladeschritt in dem dritten Ladezyklus erfasst worden ist und die verstrichene Zeit von dem Beginn des Ladeschritts in dem vierten Ladezyklus bis zu dem Beginn des Ladeschritts in dem dritten Ladezyklus größer oder gleich dem zweiten Zeitschwellenwert ist.

**7.** Arbeitsmaschine (1) nach Anspruch 1, wobei
die Benachrichtigungsvorrichtung (41) eine Hupe ist, die eine Abfahrtsanweisung und eine Anhalteanweisung an die Transportmaschine (2) erteilt, wenn sie durch die Betätigung eines Schalters ausgelöst wird.

**Revendications**

**1.** Machine de chantier (1) comprenant :

un corps de machine ;
un bras de travail qui a, sur un côté d'extrémité du bras de travail, un dispositif de travail (15) qui effectue un chargement d'un objet cible de travail (4) sur une machine de transport (2), et qui est, sur un autre côté d'extrémité du bras de travail, fixé au corps de machine ;
un capteur de posture (24, 25, 26, 27, 28) qui détecte une posture du bras de travail incluant le dispositif de travail (15) ;
un capteur de charge (29, 30, 31, 32) qui détecte une charge agissant sur le bras de travail ;
un dispositif de notification (41) destiné à donner une notification d'une instruction de travail à la machine de transport (2) ; et
un contrôleur (21) qui détermine, sur une base de la posture et de la charge, qu'une étape de transport consistant à transporter l'objet cible de travail (4) sur la machine de transport (2) a été effectuée par le bras de travail, qui mesure en poids de l'objectif de travail (4) pendant l'étape de transport, et qui détermine, sur la base de la posture de la charge, qu'une étape de chargement consistant à effectuer un chargement de l'objet cible de travail (4) sur la machine de chantier (2) a été effectuée par le bras de travail, **caractérisée en ce que**

le contrôleur (21) est configuré pour

détecter l'instruction de travail via le dispositif de notification (41),

déterminer un début d'un travail de chargement pour la machine de transport (2) et une fin du travail de chargement sur une base d'un état de fonctionnement de la machine de chantier (1) à un moment de la détection de l'instruction de travail,

intégrer le poids de l'objet cible de travail (4) qui a été mesuré à partir du début du travail de chargement jusqu'à la fin du travail de chargement, et calculer une quantité chargée de la machine de transport (2), et

sortir la quantité chargée vers un terminal externe à la fin du travail de chargement.

2. Machine de chantier (1) selon la revendication 1, dans laquelle

le contrôleur (21) est configuré pour

déterminer, à titre de travail de chargement, une étape de transport consistant à transporter l'objet cible de travail (4) sur la machine de transport (2) via le bras de travail, et une étape de chargement consistant à charger l'objet cible de travail (4) sur la machine de transport (2) via le bras de travail, sur une base de la posture et de la charge, et

déterminer une étape de chargement initial correspondant au début du travail de chargement, et une étape de chargement final correspondant à la fin du travail de chargement sur une base d'un état de fonctionnement du bras de travail au moment de la détection de l'instruction de travail.

3. Machine de chantier (1) selon la revendication 2, dans laquelle

le corps de machine a une structure pivotante (11) qui peut pivoter vers la gauche et vers la droite, et

le contrôleur (21) est configuré pour

déterminer que l'étape de chargement initial a été effectuée quand la structure pivotante (11) s'est arrêtée à une étape de transport à laquelle l'instruction de travail a été détectée, et

déterminer que l'étape de chargement final a été effectuée quand la structure pivotante (11) pivote à une étape de transport au niveau d'un cycle de chargement pendant lequel l'instruction de travail a été détectée.

4. Machine de chantier (1) selon la revendication 2, dans laquelle

le dispositif de travail (15) est un godet destiné à excaver l'objet cible de travail (4), et

le contrôleur (21) est configuré pour

déterminer que l'étape de chargement initial a été effectuée quand un angle d'une section d'ouverture du godet relativement à un plan horizontal au moment de la détection de l'instruction de travail est égal ou supérieur à un angle seuil prédéterminé, et

déterminer que l'étape de chargement final a été effectuée quand, après qu'il a été déterminé que l'étape de chargement initial a été effectuée, l'angle de la section d'ouverture du godet relativement au plan horizontal au moment de la détection de l'instruction de travail est inférieur à l'angle seuil.

5. Machine de chantier (1) selon la revendication 2, dans laquelle

le dispositif de travail (15) est un godet destiné à excaver l'objet cible de travail (4), et

le contrôleur (21) est configuré pour

déterminer que l'étape de changement initial a été effectuée quand un point le plus bas (PrevHbk) d'une hauteur (Hbk) d'une pointe de griffe de godet à une étape de chargement à laquelle l'instruction de travail a été détectée est inférieur à une hauteur seuil prédéterminée, et

déterminer que l'étape de chargement final a été effectuée quand le point le plus bas (PrevHbk) de la hauteur (Hbk) de la pointe de griffe de godet à une étape de chargement au niveau d'un cycle de chargement pendant lequel l'instruction de travail a été détectée est supérieur à la hauteur seuil (TH_Hbk).

6. Machine de chantier (1) selon la revendication 2, dans laquelle

le contrôleur (21) est configuré pour

déterminer qu'une étape de transport au niveau d'un premier cycle de chargement est l'étape de chargement initial quand l'instruction de travail est détectée à l'étape de transport au niveau du premier cycle de chargement et qu'une quantité chargée jusqu'à un second cycle de chargement qui est un cycle précédant le premier cycle de chargement est inférieure à un chargement seuil, ou quand l'instruction de travail est détectée à l'étape de transport au niveau du premier cycle de chargement et qu'un temps écoulé depuis un début de l'étape de transport au niveau du premier cycle de chargement jusqu'au moment de la détection de l'instruction de travail est supérieur à un premier temps seuil,

intégrer un poids transporté calculé à l'étape de transport au niveau du premier cycle de chargement avec une quantité chargée jusqu'au second cycle de chargement qui est le cycle précédant le premier cycle de chargement à une étape de chargement au niveau du premier cycle de chargement, et calculer la quantité chargée de la machine de transport (2) dans un cas dans lequel : l'instruction de travail est détectée à l'étape de transport au niveau du premier cycle de chargement, et la quantité chargée jusqu'au second cycle de chargement est égale ou supérieure au chargement seuil ; et l'instruction de travail est détectée à l'étape de transport au niveau du premier cycle de chargement, et le temps écoulé depuis le début de l'étape de transport au niveau du premier cycle de chargement jusqu'au moment de la détection de l'instruction de travail est égal ou inférieur au premier temps seuil,

déterminer qu'une étape de chargement à un troisième cycle de chargement est l'étape de chargement final quand l'instruction de travail est détectée à l'étape de chargement au niveau du troisième cycle de chargement et qu'un poids transporté calculé à une étape de transport au niveau du troisième cycle de chargement est supérieur à un poids seuil, ou quand l'instruction de travail est détectée à l'étape de chargement au niveau du troisième cycle de chargement et qu'un temps écoulé depuis un début d'une étape de chargement au niveau d'un quatrième cycle de chargement qui est un cycle précédant le troisième cycle de chargement jusqu'à un début de l'étape de chargement au niveau du troisième cycle de chargement est inférieur à un second temps seuil, et

intégrer un poids transporté calculé à l'étape de transport au niveau du troisième cycle de chargement avec une quantité chargée jusqu'au quatrième cycle de chargement qui est le cycle précédant le troisième cycle de chargement, et calculer la quantité chargée de la machine de transport (2) quand l'instruction de travail est détectée à l'étape de chargement au niveau du troisième cycle de chargement et que le poids transporté calculé à l'étape de transport au niveau du troisième cycle de chargement est égal ou inférieur au poids seuil, ou quand l'instruction de travail est détectée à l'étape de chargement au niveau du troisième cycle de chargement et qu'un temps écoulé depuis le début de l'étape de chargement au niveau du quatrième cycle de chargement jusqu'au début de l'étape de chargement au niveau du troisième cycle de chargement est égal ou supérieur au second temps seuil.

7. Machine de chantier (1) selon la revendication 1, dans laquelle
le dispositif de notification (41) est un klaxon qui donne une instruction de départ et une instruction d'arrêt à la machine de transport (2) quand il est enclenché via un actionnement d'un commutateur.

# FIG. 1

# FIG. 2

# FIG. 3

# FIG. 4A

START

S100 — LOADING FLAG
Fload = ON, AND LAST ARM-
BOTTOM PRESSURE PrevPam < 
THRESHOLD Th_Ram_dig, AND CURRENT 
ARM-BOTTOM PRESSURE Pam > 
THRESHOLD Th_Pam_dig?  —— NO

YES

S101 — EXCAVATION FLAG Fdig = ON,
LOADING FLAG Fload = OFF

S102 — HAULED WEIGHT M = 0 (RESET)

S103 — EXCAVATION FLAG
Fdig = ON, AND LAST ARM-
BOTTOM PRESSURE PrevPam > 
THRESHOLD Th_Pam_cry, AND CURRENT 
ARM-BOTTOM PRESSURE Pam < 
THRESHOLD Th_Pam_cry?  —— NO

YES

S104 — HAULAGE FLAG Fcry = ON,
EXCAVATION FLAG Fdig = OFF

S105 — HAULAGE FLAG Fcry = ON?  —— NO

YES

S106 — TIME tpl ≥
TIME THRESHOLD Th_tpl?  —— NO  —— S107

YES

S108 — HAULED WEIGHT M = SUM(MI)/tpl

S107 — CALCULATE AND
RECORD
INSTANTANEOUS
WEIGHT MI

(A)

(B)

# FIG. 4B

Ⓐ       Ⓑ

S109 — HAULAGE FLAG
Fcry = ON, AND LAST BUCKET
ANGLE Prev $\theta$ bk < THRESHOLD Th_$\theta$ bk_load,   NO
AND CURRENT BUCKET ANGLE $\theta$ bk >
THRESHOLD Th_$\theta$ bk_load?

YES ↓

S110 — LOADING FLAG Fload = ON,
HAULAGE FLAG Fcry = OFF

S111 — LOADING IN-PROGRESS FLAG   NO
Flw = ON?

YES ↓

S112 — LOADED AMOUNT Mtotal = Mtotal + M

S113 — WORK INSTRUCTION Fhorn = ON?   NO

YES ↓

S114 — HAULAGE FLAG
Fcry = ON, AND BUCKET ABSOLUTE   NO
ANGLE $\theta$ ab ≥ Th_$\theta$ ab?

YES ↓

S115 — LOADING IN-PROGRESS
FLAG Flw = ON

S116 — LOADING FLAG
Fload = ON, AND BUCKET   NO
ABSOLUTE ANGLE $\theta$ ab
<Th_$\theta$ ab?

YES ↓

S117 — LOADING IN-PROGRESS FLAG Flw = OFF

S118 — TRANSMIT Mtotal

S119 — Mtotal = 0

EP 3 933 117 B1

# FIG. 5

# FIG. 6

# FIG. 7

(a)

(b)

# FIG. 8

| | | |
|---|---|---|
| 90 | TARGET LOADING AMOUNT | 3800 kg |
| 91 | LOADED AMOUNT | 0 kg |
| 92 | REMAINING | 3800 kg |
| 93 | WEIGHT | 940 kg |
| 94 | LOADING IS STARTED. IMPLEMENT LOADING. BE CAREFUL ABOUT REMAINING LOADING AMOUNT. | |

~23

| | | |
|---|---|---|
| 90 | TARGET LOADING AMOUNT | 3800 kg |
| 91 | LOADED AMOUNT | 3740 kg |
| 92 | REMAINING | 60 kg |
| 93 | WEIGHT | ---- kg |
| 94 | LOADED AMOUNT WAS TRANSMITTED. IMPLEMENT LOADING FOR NEXT TRUCK. | |

~23

## FIG. 9A

FROM Fcry CONFIRMATION
PROCESS (S105)

S120 — SWING STRUCTURE
ANGULAR VELOCITY $\omega$ < THRESHOLD
Th_$\omega$ stop, AND BUCKET ABSOLUTE
ANGLE $\theta$ ab > THRESHOLD
Th_$\theta$ ab? — NO

YES

S121 — COUNT Cstop = Cstop + 1

TO HAULED WEIGHT
CALCULATION PROCESS (S106)

## FIG. 9B

FROM WORK INSTRUCTION
DETERMINATION PROCESS (S113)

S122 — COUNT Cstop >
THRESHOLD Th_Cstop? — NO

YES

S115 — LOADING IN-PROGRESS
FLAG Flw = ON

S117 — LOADING IN-PROGRESS
FLAG Flw = OFF

S118 — TRANSMIT LOADED
AMOUNT Mtotal

S119 — LOADED AMOUNT
Mtotal = 0

TO EXCAVATION WORK
DETERMINATION PROCESS (S100)

# FIG. 10

FROM LOADING WORK START
CONFIRMATION PROCESS (S109, S111, S112)

S130 — LOADING FLAG
Fload = ON, AND BUCKET ABSOLUTE
ANGLE $\theta$ ab > Th_$\theta$ ab_load — NO

↓ YES

S131 — CALCULATE BUCKET-CLAW-TIP HEIGHT Hbk

S132 — CLAW-TIP HEIGHT Hbk < PrevHbk? — NO

↓ YES

S133 — PrevHbk = Hbk

S113 — WORK INSTRUCTION Fhorn = ON? — NO

↓ YES

S134 — INSTRUCTION RETENTION FLAG TempFhorn = ON

S135 — INSTRUCTION RETENTION FLAG
TempFhorn = ON? — NO

↓ YES

S136 — BUCKET ABSOLUTE ANGLE $\theta$ ab >
Th_$\theta$ ab_load? — NO

YES ↓

S137 — PrevHbk < HEIGHT
THRESHOLD Th_Hbk? — NO

YES ↓

S115 — LOADING IN-PROGRESS
FLAG Flw = ON

S112 — LOADED AMOUNT
Mtotal = Mtotal + M

S117 — LOADING IN-PROGRESS
FLAG Flw = OFF

S118 — TRANSMIT LOADED
AMOUNT Mtotal

S119 — LOADED AMOUNT
Mtotal = 0

S138 — INSTRUCTION RETENTION FLAG TempHorn = OFF,
RESET PrevHbk

TO EXCAVATION WORK
DETERMINATION PROCESS (S100)

# FIG. 11

(a)

(b)

# FIG. 12

```
FROM WORK INSTRUCTION
DETERMINATION PROCESS (S113)
```

S140 — HAULAGE FLAG Fcry = ON?  —NO→

│YES

S141 — BUCKET ABSOLUTE ANGLE θab >
THRESHOLD Th_θab?  —NO→

│YES

S145 — LOADING FLAG Fload = ON?  —NO→

│YES

S146 — BUCKET ABSOLUTE ANGLE θab <
THRESHOLD Th_θab?  —NO→

│YES

S147 — HAULED
WEIGHT M > THRESHOLD
Th_M, OR ELAPSED TIME tload <
THRESHOLD Th_tload?  —NO→

│YES

S148 — LOADED AMOUNT Mtotal
= Mtotal + M

S142 — LOADED
AMOUNT Mtotal < THRESHOLD
Th_Mtotal, OR ELAPSED TIME tcry >
THRESHOLD Th_tcry?  —NO→

│YES

S143 — WAIT UNTIL LOADING
FLAG Fload = ON

S144 — LOADED AMOUNT Mtotal
= Mtotal + M

S149 — LOADING IN-PROGRESS
FLAG Flw = ON

S150 — LOADING IN-PROGRESS
FLAG Flw = OFF

S151 — TRANSMIT LOADED
AMOUNT Mtotal

S152 — LOADED AMOUNT Mtotal = 0

S153 — OUTPUT WARNING, AND
CONFIRMATION SCREEN

```
TO LOADING DETERMINATION
PROCESS (S100)
```

# FIG. 13

# FIG. 14

FIG. 15

START

S160 — ACQUIRE EXCAVATOR POSITIONAL DATA Pshovel, TRUCK POSITIONAL DATA Ptruck, AND TRUCK IDENTIFICATION DATA IDtruck, CALCULATE RELATIVE DISTANCE Lt

S161 — IS THERE Idtruck SATISFYING (LAST RELATIVE DISTANCE PrevLt > THRESHOLD Th_Lt, AND RELATIVE DISTANCE Lt ≤ THRESHOLD Th_Lt)? — NO

YES

S162 — CREATE BUFFER AREA Buf(IDtruck) FOR IDtruck SATISFYING CONDITION

S163 — IS THERE Idtruck SATISFYING (LAST RELATIVE DISTANCE PrevLt ≤ THRESHOLD Th_Lt, AND RELATIVE DISTANCE Lt > THRESHOLD Th_Lt)? — NO

YES

S164 — ERASE BUFFER AREA Buf(IDtruck) OF IDtruck SATISFYING CONDITION

S165 — LOADING IN-PROGRESS FLAG Flw = ON? — NO

YES

S166 — LAST LOADING IN-PROGRESS FLAG PrevFlw = OFF, AND NUMBER OF Buf(IDtruck) = 1? — NO

YES

S167 — SET IDtruck SATISFYING CONDITION AS IDtruck OF HAULAGE MACHINE FOR WHICH LOADING IS BEING PERFORMED

S168 — Buf (IDtruck) = Buf (IDtruck) + 1

S169 — LAST LOADING IN-PROGRESS FLAG PrevFlw = ON, AND LOADING IN-PROGRESS FLAG Flw = OFF? — NO

YES

S170 — EXTRACT IDtruck OF MAX(Buf(IDtruck))

S171 — NUMBER OF EXTRACTED Idtruck > 1? — NO

YES

S172 — DISPLAY Idtruck SELECTION SCREEN

S173 — ACQUIRE SELECTED Idtruck

S174 — TRANSMIT Mtotal AND IDtruck

S175 — ERASE BUFFER AREA Buf(IDtruck) OF EXTRACTED IDtruck

# FIG. 16

# FIG. 17

# FIG. 18

# FIG. 19

```
┌─────────────────────────────┐              ┌─────────────────────────────┐
│ FROM LOADING IN-PROGRESS    │              │ FROM LOADING IN-PROGRESS    │
│ FLAG ON PROCESS (S115)      │              │ FLAG OFF PROCESS (S119)     │
└─────────────────────────────┘              └─────────────────────────────┘
```

S180 ──
┌─────────────────────────────┐
│ RECORD LOADING IN-PROGRESS  │
│ FLAG ON TIME t_lw_on        │
└─────────────────────────────┘

S182 ──
┌─────────────────────────────┐
│ RECORD LOADING IN-PROGRESS  │
│ FLAG OFF TIME t_lw_off      │
└─────────────────────────────┘

S181 ──
┌─────────────────────────────┐
│ MEASURE HAULAGE-MACHINE     │
│ REPLACEMENT TIME t_extruck  │
│ (CURRENT TIME − t_lw_off)   │
└─────────────────────────────┘

S183 ──
┌─────────────────────────────┐
│ MEASURE LOADING CYCLE       │
│ WORK TIME t_lcycle          │
│ (CURRENT TIME − t_lw_on)    │
└─────────────────────────────┘

S184 ──
$t\_extruck >$ THRESHOLD Th_t_extruck?   NO →

S185 ──   YES
┌─────────────────────────────┐
│ LENGTHY-REPLACEMENT-TIME    │
│ COUNT Nl_truck = Nl_truck + 1 │
└─────────────────────────────┘

S186 ──
$t\_lcycle >$ THRESHOLD Th_t_lcycle   NO →

S187 ──   YES
┌─────────────────────────────┐
│ LENGTHY-WORK-TIME           │
│ COUNT Nl_cycle = Nl_cycle + 1 │
└─────────────────────────────┘

S188 ──
$Nl\_truck >$ THRESHOLD Th_Nlong?   NO →

YES ↓

S189 ──
$Nl\_cycle >$ THRESHOLD Th_Nlong?   NO →

S190 ──
$Nl\_cycle >$ THRESHOLD Th_Nlong?   NO →

S191 ──  YES
┌─────────────────────┐
│ WARNING ABOUT       │
│ OVERALL LENGTHY     │
│ WORK TIME           │
└─────────────────────┘

S192 ──
┌─────────────────────┐
│ WARNING ABOUT       │
│ LENGTHY WORK-       │
│ SUSPENSION TIME     │
└─────────────────────┘

S193 ──  YES
┌─────────────────────┐
│ WARNING ABOUT       │
│ LENGTHY LOADING     │
│ CYCLE WORK TIME     │
└─────────────────────┘

┌─────────────────────────────┐
│ TO LOADING DETERMINATION    │
│ PROCESS (S100)              │
└─────────────────────────────┘

# FIG. 20

90 — TARGET LOADING AMOUNT    3500 kg

91 — LOADED AMOUNT    0 kg

92 — REMAINING    3500 kg

93 — WEIGHT    ――― kg

94 — WAITING FOR TRUCK.

~23

45

LOADING SITE A

LOADING SITE B

EARTH DROPPING SITE

MANAGEMENT BUILDING    WAITING FOR TRUCK    WAITING TIME  2:45

LOADING SITE C

96

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010089633 A